# EUROPÄISCHE PATENTSCHRIFT

(11) **EP 2 986 247 B1**
(45) Veröffentlichungstag und Bekanntmachung des Hinweises auf die Patenterteilung: **13.11.2019**
(21) Anmeldenummer: 13730119.8
(22) Anmeldetag: 13.06.2013
(51) Int. Cl.: A61C 8/00

(54) **EINTEILIGES ZAHNIMPLANTAT, SET UMFASSEND EIN ZAHNIMPLANTAT UND EINE VORRICHTUNG ZUM BIEGEN EINES ZAHNIMPLANTATS**
ONE-PART DENTAL IMPLANT, KIT COMPRISING A DENTAL IMPLANT AND A DEVICE FOR BENDING A DENTAL IMPLANT
IMPLANT DENTAIRE D'UN SEUL TENANT, KIT COMPRENANT UN IMPLANT DENTAIRE ET UN DISPOSITIF DE CINTRAGE D'UN IMPLANT

(43) Veröffentlichungstag der Anmeldung: 24.02.2016
(73) Patentinhaber: Hager & Meisinger GmbH, 41468 Neuss (DE)
(72) Erfinder: MOSER, Walter, 5018 Erlinsbach (CH)
(74) Vertreter: Schollweck, Susanne
(86) Internationale Anmeldenummer: PCT/EP2013/001759
(87) Internationale Veröffentlichungsnummer: WO 2014/198282

(56) Entgegenhaltungen:
- EP-A1- 2 438 885
- EP-A1- 2 438 885
- WO-A1-01/12096
- WO-A1-01/12096
- WO-A1-2005/020839
- WO-A1-2005/020839
- WO-A1-2014/139668
- WO-A2-2007/017257
- CH-A- 44 706
- DE-A1- 2 715 178
- DE-U1-202007 018 726
- DE-U1-202008 004 960
- DE-U1-202013 002 300
- DE-U1-202013 002 300

## Beschreibung

### Gebiet der Erfindung

Die Erfindung betrifft ein Implantat zur Verankerung im menschlichen (ggf. auch im tierischen) Ober- oder Unterkiefer, sowie ein System, das ein Implantat und eine Vorrichtung zum Biegen eines Implantats umfasst.

### Hintergrund der Erfindung

Zahnimplantate sind entweder als einteilige Konstruktionen oder als zweiteilige Konstruktionen bekannt. Bei der zweiteiligen Ausführung wird zunächst eine künstliche Zahnwurzel in den Kieferknochen implantiert und diese anschließend mit einer zweiten Komponente, dem Aufbaupfosten, verbunden. Die Verbindung mit dem Aufbaupfosten erfolgt entweder intraoperativ oder nach einer Einheilungsphase von mehreren Wochen. Liegt die Verbindungsstelle zwischen künstlicher Zahnwurzel und Aufbaupfosten unterhalb des Zahnfleischniveaus, kann nach der chirurgischen Abdeckung mit der Schleimhaut die Zahnwurzel unbelastet einheilen. Damit kann eine sichere, nicht durch lastbedingte Mikrobewegungen gestörte Einheilung in den Knochen erzielt werden. In Fällen, bei welchen eine primäre Verankerungsstabilität der Zahnwurzel im Kieferknochen eine mikrobewegungsfreie Einheilung unter moderater Belastung zulässt, kann eine intraoperative Montage des Aufbaupfostens erfolgen. Auf Grund der Stimulation des Knochenwachstums durch die mechanischen Reize kann bei ausreichender primärer Stabilität so eine raschere Osseointegration der Zahnwurzel erzielt werden.

Die künstliche Zahnwurzel der zweiteiligen Ausführung weist dazu einen Verbindungsmechanismus auf, mittels welchem der Aufbaupfosten mechanisch fest mit der Zahnwurzel verbunden werden kann. Bekannte Ausführungen sind formschlüssige, z.B. mit Schrauben gesicherte Sechskant- oder Achtkantverbindungen oder, alternativ, Konusverbindungen. Der Aufbaupfosten trägt die spätere zahnprothetische Konstruktion, welche entweder fest oder abnehmbar montiert wird.

Als Implantatformen für die künstliche Zahnwurzel werden häufig schraubenförmige Geometrien (WO 2008/128756 A2) oder zylinderförmige Geometrien (EP 0 657 144 A1) verwendet, wobei in den meisten Anwendungen der schraubenförmigen Verankerung, wegen der Vorteile bei der Primärstabilität und der Einfachheit der Handhabung, der Vorzug gegeben wird.

Als Werkstoffe für die Bauteile der zweiteiligen Systeme haben sich Titanlegierungen etabliert, welche im Bereich der künstlichen Zahnwurzel mittels verschiedener Technologien mit rauen, porösen Oberflächen versehen werden, welche die Osseointegration begünstigen. Zusätzlich zur Makro- und Mikrostruktur sind Kalzium-Phosphat-Beschichtungen verschiedenster Kristallographie und Morphologie als die Knochenapposition fördernde Schichten bekannt.

Nach erfolgter Implantation kann bei den zweiteiligen Implantaten ein nach Größe und Orientierung ausgesuchter Aufbaupfosten eingesetzt werden. Damit ist die Ausrichtung der künstlichen Zahnwurzel, welche sich nach den Bedingungen des Kieferknochens richtet, unabhängig von der Ausrichtung des prothetischen Aufbaus, welcher sich nach den Bedingungen des Zahnersatzes richtet. Zusätzlich können diese Aufbaupfosten mittels Schleifbearbeitung in geringem Maße angepasst werden.

Die Konstruktionen, welche für die Verbindung zwischen künstlicher Zahnwurzel und Aufbaupfosten verwendet werden, müssen die erheblichen Kaukräfte, welche über die zahnprothetische Konstruktion in den Aufbaupfosten eingeleitet werden, übertragen. Dabei wirken sowohl axiale Kräfte und Querkräfte wie auch Kippmomente und Rotationsmomente auf diese Verbindung. Eine Ausgestaltung ist z.B. aus der DE 196 33 570 C1 bekannt. Hier ist eine Steckverbindung beschrieben, welche mit radial angebrachten Nuten gegen Rotation gesichert ist. Oftmals werden solche Verbindungen mit einer zentralen Schraube verspannt. Weitere Ausführungen sind nicht selbsthemmende konische Steckverbindungen, welche mittels ineinandergreifender Sechs- oder Achtkantverbindungen gegen Rotation gesichert sind und welche ebenfalls mit einer zentralen Schraube montiert werden. Eine derartige Verbindung ist z.B. in der WO 2008/128756 A2 beschrieben. Diese formschlüssig gegen Verdrehung gesicherten Verbindungen ermöglichen zwar die einfache Übertragung der Rotationsposition zwischen einem zahntechnischen Modell und der Situation im Mund des Patienten, erlauben aber keine freie Wahl der Rotationsposition des Aufbaupfostens. Je nach technischer Ausführung sind meist sechs oder acht mögliche Positionen vorgegeben. Dies ist im Fall der schraubenförmigen knöchernen Verankerung von besonderer Bedeutung, da sich dort die Rotationsposition des Implantats durch die Implantation ergibt und nicht frei wählbar ist.

Eine Ausführung, welche eine freie Wahl der Rotationsposition des Aufbaupfostens relativ zur künstlichen Zahnwurzel erlaubt, ist in EP 0 707 835 A1 beschrieben. Gezeigt ist eine selbsthemmende Konusverbindung, welche mit einer zentralen Schraube gesichert ist.

Kritisch sind alle diese Montageverbindungen besonders im Hinblick auf den Kompromiss zwischen möglichst kleiner Baugrösse, d.h. möglichst kleinem Implantatdurchmesser, und der Betriebssicherheit. Neben der Sicherheit gegen Lockerung oder Ermüdungsbruch der Verbindung durch die zyklische Kaubelastung sind hohe Anforderungen an die Dichtigkeit, d.h. Spaltfreiheit dieser Verbindung zu stellen.

Aus fertigungstechnischen Gründen sind mit Ausnahme der Konusverbindung alle formschlüssigen Verbindungen mit zumindest kleinsten Spalten behaftet. Dies gilt für den unbelasteten Zustand, verstärkt sich aber bei kaufunktionaler Belastung deutlich. Spaltbehaftete Konstruktionen werden leicht mit Keimen besiedelt und wirken so als Herde, von welchen Entzündungen ausgehen. Die Spaltbildung begünstigt also bakterielle Kontamination und lässt sich mit der Resorption des zervikalen Knochenlagers korrelieren (Zipprich, H. et al.: Erfassung, Ursachen und Folgen von Mikrobewegungen am Implantat-Abutment-Interface. In: Zeitschrift Implantologie 2007; 15(1), S. 31-46, Quintessenz Verlag).

Demgegenüber sind einteilige Implantatsysteme wesentlich einfacher in ihrer geometrischen Gestaltung, da auf eine technische Verbindung, welche die Kaukräfte mit hoher Sicherheit zu übertragen hat, verzichtet werden kann. Einphasige Systeme sind deshalb wesentlich kostengünstiger. Auch ist die Gestaltungsfreiheit im zervikalen Bereich nicht durch die Notwendigkeit einer Bauvolumen beanspruchenden Verbindung eingeschränkt. Mit einphasigen Implantaten können deshalb auch, bei gleicher Dauerfestigkeit, kleinere Implantatdurchmesser realisiert werden.

Im Falle von zylinderförmigen oder anderen, nicht mittels Schraubbewegung einzusetzenden künstlichen Zahnwurzelgeometrien können einteilige Zahnimplantate bei geeigneten Werkstoffen durch Verbiegung im Bereich des Aufbaupfostens oder Aufbaubereichs vor der Implantation vorgeformt werden. Dadurch kann eine Anpassung der Ausrichtung des den Zahnersatz aufnehmenden Teils an die Anforderungen des prothetischen Aufbaus vorgenommen werden. Im Falle der für die Verankerung vorteilhaften schraubenförmigen Zahnwurzeln ist dies wegen der durch die Implantationsposition vorgegebenen Rotationsposition, welche sich durch das Eindrehen bis zum festen Sitz ergibt, nicht möglich. Eine Anpassung der Orientierung des koronalen Teils (Aufbaubereich) nach Implantation durch Biegung ist aber wegen der hohen Kräfte, welche bei der Verbiegung auf das Knochenlager wirken, nicht oder nur in Fällen mit sehr günstigen Verankerungsbedingungen, d.h. bei grossen Längen der künstlichen Zahnwurzel und bei guten Knochenbedingungen möglich. Im Regelfall ist auf Grund der Kieferatrophie die Verwendung von kürzeren Implantaten angezeigt (meist auch bei weicherer Knochenqualität), wobei eine Biegung nach Implantation das knöcherne Lager schädigen würde.

Ein Beispiel für einteilige Implantate sind die blattförmigen Implantate nach Linkow, wie sie z.B. in der DE 25 22 941 A1 beschrieben sind (siehe auch Hartmann, H.-J.: Vom Extensionsimplantat zur Hightech-Schraube. In: zm 99, Nr. 22A, 16.11.2009, Deutscher Ärzte-Verlag).

Weitere Implantate sind in der DE 39 18 309 A1 (sog. Bauer-Schraube), der DE 32 41 963 C1 (sog. Münch-Schraube aus keramischem Werkstoff) und der DE 37 26 616 C1 (sog. Ledermann-Schraube) gezeigt.

Bekannte Implantate sind oftmals in ihrer Struktur nicht auf einen Biegeprozess in verankertem Zustand abgestimmt oder auch nicht dafür vorgesehen.

Neben dem Werkstoff Titan kamen für einteilige Zahnimplantate auch die Werkstoffe Aluminiumoxidkeramik und Kobaltlegierungen zum Einsatz, wobei sich diese Werkstoffe aus der Gruppe der Keramiken und Kobaltlegierungen auf Grund der geringeren Eignung zur Osseointegration nicht bewährt haben. Stand der Technik sind heute auf Titan basierende Oberflächen, welche durch Beschichtungen oder durch gezielt partiell wirkenden Abtrag mikrostrukturiert sind. Als Abtragsverfahren werden insbesondere Strahl- und Ätzverfahren verwendet, häufig in Kombination.

Es sind nur wenige spezifische Instrumente zur Anpassung zahntechnischer Konstruktionen oder zahntechnischer Bauteile durch gezielte Verformung im Zusammenhang mit Dentalimplantaten bekannt. Aus der DE 39 18 309 A1 ist ein Instrument bekannt, das an einem koronalen Implantatende angreifen kann. In dieser Druckschrift (siehe auch Bauer, E.: Die K.S.I. Bauerschraube, 1987, KSI-Bauer-Schraube GmbH) ist ein einteiliges Implantat mit einer Biegezone zwischen einem koronalen Teil und einem Verankerungsteil beschrieben, wobei die Anpassung des Implantats durch Biegung nach der Implantation mit oben genanntem Instrument erfolgt. Eine Biegung nach Implantation ist bei dieser Anordnung jedoch nur bei sehr langen Verankerungsgeometrien und sehr guter Knochenqualität möglich. Die Realisierung kürzerer Verankerungsgeometrien, wie dies im Bereich der Unterkieferseitenzähne oder bei geringer Kieferkammhöhe notwendig ist, ist nicht möglich, da ein kürzeres Implantat bei der Biegung zu hohe Reaktionskräfte verursacht, welche zur Schädigung des knöchernen Lagers führen. Auch bei Verwendung in weicherem Knochen ist mit einer Schädigung des Knochenlagers zu rechnen.

In der britischen Patentanmeldung GB 2 450 617 A ist ein Biegeinstrument für einen Fixationsstift beschrieben.

Ein Dentalimplantat mit Biegebereich und ein weiteres Biegeinstrument sind aus der EP 2 438 885 A1 bekannt. Aus der WO 2005/020839 A1 ist ein weiteres Dentalimplantat mit Biegebereich bekannt. Manche Instrumente sind sehr aufwändig in der Herstellung und in der Handhabung. Bei Anwendung bekannter Anordnungen wird zur Durchführung der intraoralen Anpassung durch Biegung oft eine umfassende Freilegung des Kieferkamms im Bereich des Implantats notwendig. Damit können für den Patienten Nachteile verbunden sein, wie z.B. in der Folge lokaler Knochenverlust durch die vorhergehende chirurgische Freilegung. Das Weichgewebe und Blutungen der Operationswunde erschweren die sichere Positionierung des Biegeinstruments an der dafür vorgesehenen Stelle.

### Zusammenfassung der Erfindung

Es ist Aufgabe der Erfindung, ein Zahnimplantat bereitzustellen, das auf einfache Art werkstoffschonend biegbar ist, insbesondere auch nach Implantation, also bereits im Kieferknochen verankert. Es ist weiter Aufgabe der Erfindung, eine Vorrichtung zum Biegen eines Gegenstandes, insbesondere eines Implantats, bereitzustellen, die die Biegung des Implantats auf einfache Weise ermöglicht und insbesondere die Biegung nach dessen Implantation derart ermöglicht, dass eine die Implantationsregion schonende Behandlung gewährleistet ist, insbesondere, dass keine Schädigung des Knochenlagers herbeigeführt wird. Zudem soll die Vorrichtung einfach herstellbar und einfach und sicher in der Handhabung sein. Des Weiteren ist ein Verfahren zur Biegung eines Gegenstandes, insbesondere eines Implantats, auch nach dessen Implantation, offenbart.

Durch den Gegenstand des angefügten unabhängigen Anspruchs 1 werden die oben genannten Aufgaben gelöst und die beschriebenen Vorteile erreicht (ebenfalls durch die zusätzlich aufgeführten Aspekte). Bevorzugte Ausführungsformen sind in den abhängigen Ansprüchen sowie in der nachfolgenden Beschreibung, den Beispielen und den Figuren enthalten.

Ein wesentlicher Punkt der Erfindung liegt in der speziellen Ausgestaltung der Biegegeometrie, das heißt des Biegebereichs. Der kleinste Querschnitt liegt in einem zum Verankerungsbereich gewandten Bereich des Biegebereichs, möglichst nah an dem entsprechenden Ende des Biegebereichs. Da sich der Querschnitt des Biegebereichs ausgehend vom kleinsten Querschnitt hin zum Aufbaubereich kontinuierlich erweitert, ist das Implantat bzw. der Aufbaubereich gegenüber dem Verankerungsbereich mittels eines geeigneten Instrumentes in eine für die Versorgung mit einem zahnprothetischen Aufbau geeignete Orientierung bringbar (Biegung), wobei sich die Deformation im Biegebereich derart ausbildet, dass nirgendwo kritische Biegeverformungen (örtlich hohe Konzentrationen) auftreten. Die Deformation verläuft also derart über die Länge des Biegebereichs (in einer Erstreckungsrichtung oder Längsrichtung des Implantats), dass sie für den Werkstoff unkritisch, werkstoffunschädlich und/oder auch werkstoffschonend ist. Das heißt, aufgrund der Ausgestaltung des Biegebereichs mit der Positionierung des kleinsten Querschnitts nahe am Ende des Biegebereichs, das dem Verankerungsbereich zugewandt ist, und der kontinuierlichen Vergrößerung des Querschnitts des Biegebereichs, ausgehend von dem kleinsten Querschnitt hin zu dem dem Aufbaubereich zugewandten Ende des Biegebereichs, ist der Biegebereich bei einer Biegebeanspruchung über seine Ausdehnung werkstoffunschädlich deformierbar.

Das heißt, zwischen dem dünnsten oder kleinsten Querschnitt und der Einspannung am Aufbaubereich (genauer: bis zum Ende des Biegebereichs) vergrössert sich der Querschnitt des Biegebereichs so, dass unter Einwirkung des hin zum Aufbaubereich linear zunehmenden Biegemomentes (bei Biegebeanspruchung), nach Überschreitung der Fließspannung, die Fließvorgänge in diesem Werkstoffvolumen sich homogen verteilen und so keine lokale Schädigung des Werkstoffgefüges entsteht. Der Biegebereich ist so ausgelegt, dass bei Aufbringung eines Biegemomentes eine knickfreie Biegung erzielbar ist.

Durch die entsprechende Gestaltung der Geometrie des Biegebereichs kann die Deformation längs der Biegezone auch in einem dafür vorgesehenen Bereich konzentriert werden. Dies kann im Zusammenhang mit der späteren funktionellen Beanspruchung des Zahnimplantats von Bedeutung sein.

Im Folgenden sind weitere Ausführungsformen der Erfindung angegeben.

In der Literatur finden sich diverse Begriffe für die einzelnen Abschnitte, Teile oder Bereiche eines Implantats. Der Verankerungsbereich kann auch als enossaler Teil/Bereich, also als im Knochen befindlich Teil/Bereich, bezeichnet werden, während der Aufbaubereich auch als koronaler Teil/Bereich oder auch als Abutment, Abutmentteil/-bereich bezeichnet werden kann.

Die Bereiche des Implantats erstrecken sich in einer Längsrichtung oder Erstreckungsrichtung des Implantats, wobei sich der Querschnitt (auch der jeweilige Querschnitt) quer zur Längsrichtung oder Erstreckungsrichtung erstreckt.

Der Querschnitt des Biegebereichs vergrößert sich kontinuierlich oder ist sich kontinuierlich vergrößernd ausgebildet, ausgehend vom kleinsten Querschnitt.

Der Verankerungsbereich ist derart ausgebildet, dass er in einen oder den Ober- oder Unterkieferknochen eines Menschen (ggf. auch eines Tieres) einbringbar ist, der Aufbaubereich ist zur Aufnahme einer zahnprothetischen Konstruktion ausgebildet, der Biegebereich ist derart ausgebildet, dass er biegbar ist, und/oder der Auflagerbereich ist derart ausgebildet, dass eine Vorrichtung zum Biegen des Implantats an diesem angreifen oder ansetzen kann oder an diesem ansetzbar ist, insbesondere, dass ein dafür vorgesehenes Element der Vorrichtung zum Biegen des Implantats an diesem angreifen oder ansetzen kann oder an diesem ansetzbar ist.

Die kontinuierliche Vergrößerung oder Erweiterung ist vorzugsweise als gleichmäßige Vergrößerung oder Erweiterung vorgesehen, z.B. als eine konische Vergrößerung (sich konisch verbreiternd, ausgehend vom kleinsten Querschnitt). Sie kann als gerade, konkave oder konvexe Vergrößerung oder Erweiterung ausgebildet sein.

In einer Ausführungsform weist der Biegebereich an dem dem Aufbaubereich zugewandten Ende eine erste radiusförmige Geometrie auf. Diese ist derart ausgebildet, dass sich der Querschnitt des Biegebereichs hin zu dem dem Aufbaubereich zugewandten Ende des Biegebereichs weiter kontinuierlich vergrößert. Das heißt, ausgehend von dem kleinsten Querschnitt hin zu dem dem Aufbaubereich zugewandten Ende des Biegebereichs vergrößert sich der Querschnitt des Biegebereichs durchgehend kontinuierlich.

In einer Ausführungsform weist der Biegebereich an einem oder dem dem Verankerungsbereich zugewandten Ende eine zweite radiusförmige Geometrie auf, die derart ausgebildet ist, dass sich der Querschnitt des Biegebereichs ausgehend von dem kleinsten Querschnitt hin zu dem dem Verankerungsbereich zugewandten Ende des Biegebereichs kontinuierlich vergrößert.

In einer Ausführungsform ist also der kleinste Querschnitt an der zweiten radiusförmigen Geometrie an dem dem Verankerungsbereich zugewandten Ende des Biegebereichs angeordnet.

Die Endzonen des Biegebereichs sind zur Vermeidung von Kerben jeweils mit Radien ausgebildet. Das heißt, von dem dem Verankerungsbereich zugewandten Ende des Biegebereichs ausgehend verjüngt sich die Geometrie nach koronal (in Richtung Aufbaubereich) über einen Radius auf den dünnsten Querschnitt um sich dann in Richtung Aufbaubereich kontinuierlich zu erweitern. Der Übergang von dem dem Aufbaubereich zugewandten Ende des Biegebereichs zum Aufbaubereich ist wieder durch einen Radius ausgeführt.

In einer Ausführungsform ist der Aufbaubereich als ein Aufbaukonus ausgebildet, der sich hin zu einem freien Ende des Aufbaubereichs und damit des Implantats, also abgewandt vom Verankerungsbereich, verjüngt. Konische Elemente ermöglichen eine passgenaue, stabile Verbindung, hier von Aufbaubereich und prothetischer Konstruktion, welche abnehmbar oder fest mit dem Aufbaubereich verbunden gestaltet werden kann.

Der Aufbaubereich kann weitere Geometrieelemente, wie z.B. ein zentrales Gewinde oder längs des Konus angebrachte Nuten oder Planflächen aufweisen.

Der Auflagerbereich ist in einer Ausführungsform als ein nutförmiger Bereich ausgebildet, also z.B. in Form einer Rille, wobei der nutförmige Bereich als Angriffsbereich für die Vorrichtung zum Biegen vorgesehen ist. Das heißt, u.a. an dem Auflagerbereich ist die Vorrichtung zum Biegen ansetzbar, so dass der Gegenstand bzw. das Implantat an oder in der Vorrichtung lagerbar ist. Der Auflagerbereich ist in einer Ausführungsform als ein gegenüber der Umgebung vertiefter Bereich ausgebildet. In anderen Worten: Vorzugsweise ist der Auflagerbereich als ein in einer Umfangsrichtung des Implantats nutförmig verlaufender Bereich ausgebildet, oder vorzugsweise weist der Auflagerbereich einen sich in einer Erstreckungsrichtung des Implantats erstreckenden Kantenbereich auf, der sich nach innen wölbend (hin zum Implantat) ausgebildet ist.

In einer Ausführungsform weist der Auflagerbereich einen sich in einer Erstreckungsrichtung des Implantats erstreckenden Kantenbereich auf, der geradlinig oder sich nach außen wölbend (weg vom Implantat, wulstförmig) ausgebildet ist.

In einer Ausführungsform ist ein kleinster Querschnitt des Auflagerbereichs größer als der kleinste Querschnitt des Biegebereichs ausgebildet. Vorzugsweise auch dann, wenn der Auflagerbereich als ein nutförmiger Bereich ausgebildet ist.

Zur Biegung des Implantats ist dieses an einer weiteren dafür vorgesehenen Stelle zu lagern; die Vorrichtung zum Biegen muss also an einer weiteren Stelle angreifen können, hier z.B. an dem freien Ende des Aufbaubereichs bzw. am Aufbaubereich. Somit lässt sich das Implantat (oder auch ein sonstiger geeigneter Gegenstand) in geeigneter Weise fassen und in die gewünschte Form bringen. In einer Ausführungsform ist der Aufbaubereich so ausgebildet, dass er ganz oder teilweise fassbar ist. So ist das Implantat über den Aufbaubereich und den Auflagerbereich in der Vorrichtung zum Biegen lagerbar oder faßbar und kann so gebogen werden.

Zwischen dem Biegebereich und dem Auflagerbereich ist in einer Ausführungsform ein kragenförmiges Element vorgesehen, das den Biegebereich vom Auflagerbereich trennt. Das kragenförmige Element ist also zwischen dem Biegebereich und dem Auflagerbereich angeordnet. Es kann z.B. verdickt und/oder wulstförmig ausgebildet sein.

Ist der Auflagerbereich als nutförmiger (oder nutenförmiger) Bereich ausgebildet, schließt dieser vorzugsweise mit dem kragenförmigen Element ab. Im Falle anderer Ausgestaltungen des Auflagerbereichs, wie oben beschrieben, ist vorzugsweise kein explizites kragenförmiges Element vorgesehen, der Auflagerbereich ist dann gleichzeitig als das kragenförmige Element ausgebildet.

In die Geometrie des Auflagerbereichs ist mittels der Vorrichtung zum Biegen eine Biegekraft einleitbar. Zwischen dem Auflagerbereich und der momentenstabilen Halterung des Aufbaubereichs ist die Geometrie des Biegebereichs so ausgebildet, dass bei Biegebeanspruchung eine kontrollierte Deformation im Werkstoffvolumen des Biegebereichs stattfindet.

Der Biegebereich und der Auflagerbereich dienen aufgrund ihrer Ausgestaltung gleichzeitig der Anlagerung der Mundschleimhaut und bilden durch ihre Formgebung einen zusätzlichen Widerstand gegen das Eindringen von Keimen (Labyrinth, mehrfaches Platform-Switching). Durch die verjüngte Geometrie und den anschließenden Kragen (kragenförmiges Element) entsteht eine Barriere gegen das Eindringen von Keimen aus dem Mundraum in den Bereich der knöchernen Verankerung in Form einen Labyrinthes. Zudem dient das kragenförmige Element als Versteifung. Das heißt, im Bereich des kragenförmigen Elements des Implantats ist die erzielte Deformation wegen der versteifenden Wirkung und der Nähe zur Lagerung am Auflagerbereich gleich Null. Zudem bildet der kragenförmige Bereich vorzugsweise den Auflagerbereich mit aus.

Vorzugsweise sind der Aufbaubereich, der Verankerungsbereich, der Biegebereich, der Auflagerbereich und/oder das kragenförmige Element als rotationssymmetrische Bereiche (bzw. Element) ausgebildet (abgesehen von einer Gewindestruktur des Verankerungsbereichs).

In einer Ausführungsform ist das Implantat aus einem plastisch deformierbaren Titan-Werkstoff ausgebildet. Beispielsweise finden dafür Rein-Titan oder Titanlegierungen Anwendung, z.B. Ti6A14V, Ti6A17Nb. Alternativ können auch hoch plastisch deformierbare Beta-Titanlegierungen oder Tantallegierungen zur Anwendung kommen. Gerade der Biegebereich ist so zu gestalten, dass durch die Biegung keine Vorschädigung des Werkstoffes entsteht. Spröde oder rissempfindliche Werkstoffe scheiden deshalb für das Konzept der intraoperativen Anpassung durch gezielte, kontrollierte Biegung aus.

Wegen der linear elastischen Eigenschaften des Implantatwerkstoffes muss das Implantat zur Erreichung des gewünschten Biegewinkels um einen bestimmten Betrag, um welchen der Implantatwerkstoff zurückfedert, überbogen werden. Dieser Betrag richtet sich nach dem verwendeten Werkstoff und der Geometrie der Biegezone. Dieser Wert kann ermittelt und dem Anwender z.B. in einer Tabelle oder als Anzeige am Biegeinstrument dargestellt werden.

Der Verankerungsbereich weist in einer Ausführungsform einen ersten Gewindeabschnitt und einen zweiten Gewindeabschnitt auf, wobei der erste Gewindeabschnitt zwischen dem Auflagerbereich und dem zweiten Gewindeabschnitt angeordnet ist.

In einer Ausführungsform weist der erste Gewindeabschnitt eine Flankentiefe auf, die kleiner ist, als eine Flankentiefe des zweiten Gewindeabschnitts. In einer Ausführungsform ist der erste Gewindeabschnitt als ein zweigängiges Gewinde und der zweite Gewindeabschnitt als ein eingängiges Gewinde ausgebildet. Das zweigängige Gewinde mit wenig Flankentiefe ist für die Verankerung im festeren kortikalen Anteil im Kieferknochen und das eingängige Gewinde mit grösserer Flankentiefe ist für die Verankerung im spongiösen Bereich des Kieferknochens vorgesehen.

In einer Ausführungsform haben beide Gewinde der Gewindeabschnitte die gleiche Steigung, damit bei der Insertion des Schraubenprofils keine Konflikte auftreten. Der erste Gewindeabschnitt und/oder der zweite Gewindeabschnitt weisen vorzugsweise jeweils eine Schneidkante auf, die an den jeweiligen, vom Aufbaubereich wegweisenden Enden der Gewindeabschnitte angeordnet sind (apikale Enden). Damit ist die Funktion eines selbstschneidenden Gewindes bereitgestellt.

Bei der Implantation wird zunächst das knöcherne Lager mittels eines Bohrvorgangs vorpräpariert. Zur Vorbereitung der Verankerung einer Gewindegeometrie der künstlichen Zahnwurzel im Knochen dient ein geeignetes Instrument, z.B. ein Gewindeschneider oder Gewindeformer, oder es kommt bei der künstlichen Zahnwurzel, wie bereits oben beschrieben, ein selbstschneidendes Gewinde zur Anwendung. Die eigentliche Implantation erfolgt dann mittels eines Eindrehinstrumentes, welches das Implantat sicher fasst und die Aufbringung des Eindrehmomentes mit einem Handrad, einer Ratsche oder einem motorischen Antrieb erlaubt.

Je nach Knochenqualität muss das Gewinde geschnitten werden (sehr hart), oder es wird vorgeformt durch eine Art Verdrängung (mittel) oder es kann auf die Gewindeerzeugung verzichtet werden (relativ weich).

Die Schneidkanten an den Gewindeflanken und etwaige Spannuten sind so ausgebildet, dass das Implantat in einer vorgeformten, noch glatten Kavität sich mit zunehmender Eindrehtiefe eine Gewindestruktur selbst ausformt. Das so entstehende Knochengewinde entsteht durch Zerspanen oder durch Verdrängen, wodurch die Eindrehcharakteristik und die Verklemmeigenschaften, d.h. die Primärstabilität, bestimmt werden.

Neben der gewindeförmigen Makrostruktur ist der Bereich der künstlichen Zahnwurzel vorzugsweise mit einer insbesondere aufgerauten Mikrostruktur, hergestellt durch Auftrag oder gezielten Abtrag, vorgesehen. Diese rauen Strukturen dienen einerseits der Anregung des Knochenanwachsens, andererseits der dauerhaften festen Verzahnung mit den angewachsenen Knochenstrukturen nach der Einheilphase. Derartige Mikrostrukturen werden z.B. durch Strahlverfahren, durch Ätzverfahren oder durch eine Kombination dieser beiden abtragenden Verfahren oder durch ein auftragendes Verfahren, z.B. Beschichtung mit einer Titan-Plasma-Spritzschicht, erzeugt.

Die Implantation erfolgt vorzugsweise so, dass das in Richtung Aufbaubereich weisende Ende des ersten Gewindeabschnitts auf oder leicht unter dem Knochenniveau liegt. Auf Grund der anatomischen Gegebenheiten, d.h. der Krümmung des Kieferkamms, liegt dann der Auflagerbereich entweder über dem Knochenniveau oder teilweise auch auf oder leicht unter dem Knochenniveau.

Der Auflagerbereich (z.B. nutförmiger Bereich) für die Aufnahme oder das Ansetzen der Vorrichtung zum Biegen schließt vorzugsweise direkt an den Gewindebereich (Verankerungsgewinde) des Verankerungsbereichs an.

Beim Verbiegen des Implantats nimmt, ausgehend vom Kraftangriffsort im Auflagerbereich, das Biegemoment M_{b} bis hin zur festen Einspannung am Aufbaubereich linear zu. Im Bereich des kragenförmigen Elements (explizit vorgesehen oder in Gestalt des Auflagerbereichs) des Implantats ist die erzielte Deformation, wie bereits oben erwähnt, wegen der versteifenden Wirkung und der Nähe zur Krafteinleitung gleich Null. Im in Richtung Aufbaubereich anschließenden sich verjüngenden, insbesondere sich radiusförmig verjüngenden Querschnitt nimmt die Biegespannung bis zum kleinsten Querschnitt zu. Zwischen dem kleinsten Querschnitt und dem dem Aufbaubereich zugewandten Ende des Biegebereichs vergrössert sich, wie ebenfalls oben erwähnt, der Querschnitt der Geometrie der Biegezone so, dass unter Einwirkung des in Richtung Aufbaubereich linear zunehmenden Biegemomentes, nach Überschreitung der Fließspannung, die Fließvorgänge in diesem Werkstoffvolumen sich homogen verteilen und so keine lokale Schädigung des Werkstoffgefüges entsteht.

In einem weiteren Aspekt bezieht sich die Erfindung auf eine Biegevorrichtung als Teil eines Systems nach Anspruch 10.

Ein wesentlicher Punkt der Offenbarung liegt darin, dass mit der Vorrichtung bzw. den Vorrichtungen ein Biegevorgang auf einfache Weise an einem insbesondere dafür vorgesehenen Implantat, das bereits im Kieferknochen platziert ist, vorgenommen werden kann. Dabei wird eine Biegespannung im Biegebereich des Implantats derart erzeugt, dass örtlich hohe Konzentrationen vermeidbar sind und der Werkstoff so nicht geschädigt wird. Dies ist durch die oben beschriebene spezielle Ausgestaltung des Biegebereichs des Implantats möglich. Nach erfolgter Implantation des Implantats im Knochen kann der Aufbaubereich des Implantats gegenüber dem wurzelseitigen Verankerungsbereich mittels der Vorrichtung/den Vorrichtungen durch eine Schließbewegung der Schenkel gezielt in einem definierten Winkel (Biegewinkel) gebogen werden, ohne dass der wurzelseitige Verankerungsbereich durch Biegekräfte belastet wird. Da die Vorrichtung zum Biegen (Biegeinstrument) die Kräfte und Momente zwischen Auflagerbereich und Aufbaubereich neutralisiert, erfahren der enossale Bereich und damit der den Verankerungsbereich umgebende Knochen weder Kräfte noch Momente aus dem Biegeprozess.

Das Implantat ist also bei einer Schließbewegung der Schenkel über den Biegebereich biegbar. In anderen Worten: Aufgrund der Relativbewegung der Schenkel zueinander, ist das Implantat an einem hierfür vorgesehenen Bereich bei einer Schließbewegung der Schenkel biegbar.

Die Stützeinrichtung ist somit derart ausgebildet und/oder angeordnet, dass die Stützeinrichtung an den Auflagerbereich des Implantats bei einer Schließbewegung der Schenkel ansetzbar ist und/oder dass die Kraft in den Auflagerbereich des Implantats bei einer Schließbewegung der Schenkel einleitbar ist.

Auch wird die Biegung durch die Schließbewegung der Schenkel erzielt.

Somit lässt sich die Ausrichtung des koronalen Anteils, insbesondere des Aufbaubereichs des Implantats, an die individuellen Bedingungen der Implantationsregion und des Patienten durch kontrolliertes Verbiegen mittels der Vorrichtungen anpassen. Die Vorrichtungen dienen also der geometrischen Anpassung des Implantats auch nach erfolgter Implantierung.

Mit der beschriebenen Vorrichtung bzw. den beschriebenen Vorrichtungen ist zudem nur eine sehr partielle chirurgische Freilegung des Implantats im Bereich des Kieferkammes notwendig. Die Umgebung am Kieferkamm muss nur partiell, d.h. im Bereich des Angriffs der Stützeinrichtung freigelegt werden. Zusätzlich ist die Handhabung der Vorrichtung/en während der Operation sehr einfach, da zur sicheren Verwendung keine vollständige Sichtkontrolle im einblutenden Operationsfeld notwendig ist (die Umgebung am Kieferkamm muss nicht vollständig einsehbar sein). Da die Stützeinrichtung relativ zur Halteeinrichtung bewegbar ist, entsprechend einem Scheren- oder Zangenwerkzeug, nähert sich die Stützeinrichtung an den Kieferkamm an, insbesondere bogenförmig, derart, dass sich der Abstand zum Kieferkamm allmählich verringert. Das heißt, solange die Stützeinrichtung nicht in unmittelbarer Nähe des Implantats ist (z.B. beim Aufnehmen des Implantats in die Vorrichtung zum Biegen), ist der das Implantat umgebende Kieferkamm nicht von der Stützeinrichtung beeinträchtigt. Mit der Vorrichtung bzw. den Vorrichtungen kann also eine schonende Anpassung des verankerten Implantats sowohl in Bezug auf das Implantat als auch auf die Implantationsregion vorgenommen werden.

Im Folgenden sind weitere Ausführungsformen der Vorrichtung zum Biegen eines Implantats angegeben.

Nachfolgende Erläuterungen und Ausführungen beziehen sich in der Regel auf das Implantat, insbesondere auf ein bereits im Kieferknochen verankertes Implantat. Sofern zweckmäßig, beziehen sich die Erläuterungen auch auf einen sonstigen zu biegenden Gegenstand (z.B. eine andere Art von Metallstift), auch wenn dies nicht explizit erwähnt ist. Der Gegenstand muss hierfür einen Lagerbereich aufweisen, mit welchem er in der Halteeinrichtung fixierbar ist. Zudem muss ein Auflagerbereich vorgesehen sein, an dem eine Kraft einleitbar ist. Der Gegenstand ist dann mittels der Biegevorrichtung an einem hierfür vorgesehenen Ort biegbar. Das Implantat lässt sich mit der Vorrichtung auch in eine gewünschte Richtung biegen, wenn es nicht im Kieferknochen verankert ist. Das Implantat ist dann in der Vorrichtung zu positionieren und wird über die Halteeinrichtung und die Stützeinrichtung gehalten. Sodann kann durch die Bewegung der Schenkel relativ zueinander der Biegevorgang vorgenommen werden. Dies kann insbesondere für einen anderen Gegenstand, der nicht mit einem Ende verankert ist, zweckmäßig sein. Aber auch verankerte, also an einem Ende befestigte Gegenstände lassen sich so mittels der Vorrichtung biegen.

Als "biegemomentenstabil" ist z.B. eine mechanischen Fixierung des Implantats zu verstehen, die geeignet ist, ein ein- oder mehrachsiges Biegemoment aufzunehmen.

Wie bereits oben beschrieben gilt für die Vorrichtung, dass aufgrund der Relativbewegung der Schenkel zueinander, bei einer Schließbewegung der Schenkel, das Implantat an einem hierfür vorgesehenen Bereich biegbar ist. Vorzugsweise wird das Implantat bei geöffneten Schenkeln in die Vorrichtung aufgenommen und dann durch die Schließbewegung positioniert und gebogen.

Die Halteeinrichtung ist derart ausgebildet, dass ein Aufbaubereich des Implantats oder mindestens ein Teil des Aufbaubereichs fixierbar, vorzugsweise biegemomentenstabil fixierbar ist. Die Stützeinrichtung ist derart ausgebildet, dass eine Kraft in einen Auflagerbereich des Implantats bei einer Schließbewegung der Schenkel einleitbar ist und/oder dass sie bei einer Schließbewegung der Schenkel an einen Auflagerbereich des Implantats ansetzbar ist.

Für alle Ausführungsformen gilt vorzugsweise, dass die Elemente der Vorrichtung zum Biegen derart ausgebildet sind, dass diese im Gebrauch der Vorrichtung oder auch im Gebrauch der einzelnen Elemente entsprechend am Implantat (oder an einem sonstigen geeigneten Gegenstand) angreifen, so dass der gewünschte Biegevorgang ausführbar ist.

Die distalen Enden sind in diesem Zusammenhang die Enden der Schenkel (distales Ende der Vorrichtung), die dem Patienten zugewandt und damit einem Bediener, z.B. dem Zahnarzt, abgewandt sind und an denen die eigentlichen Funktionselemente der Vorrichtung vorgesehen sind. Proximale Enden der Schenkel (am proximalen Ende der Vorrichtung) sind für die Handhabung durch den Bediener vorgesehen und können entsprechend ausgestaltet sein. Beispielsweise können explizite Griffe oder Griffelemente an den proximalen Enden vorgesehen sein, die den Fingern des Bedieners angepasst sind und so für eine bessere Handhabung sorgen. Auch könnten scherenähnliche Griffelemente vorgesehen sein, so dass die Vorrichtung zum Biegen ähnlich einem Schneidinstrument (Schere) betätigbar ist.

Die Schenkel können auch als Branchen, Instrumentenschenkel oder Zangenschenkel bezeichnet werden.

In einer Ausführungsform sind die Halteeinrichtung und die Stützeinrichtung mittels des ersten Schenkels und des zweiten Schenkels bogenförmig relativ zueinander bewegbar. Dies ermöglicht die gewünschte Biegung. Das heißt, durch die Relativbewegung der Schenkel zueinander bewegt sich sowohl die Halteeinrichtung, als auch die Stützeinrichtung bogenförmig (Biegelinie des Biegebereichs).

Die Halteeinrichtung ist in einer Ausführungsform derart ausgebildet, dass eine biegemomentenstabile Lagerung oder Fixierung des Aufbaubereichs (oder mindestens eines Teils des Aufbaubereichs) des Implantats im Gebrauch möglich ist. Diese Lagerung muss so gestaltet sein, dass zumindest Biegemomente und Querkräfte (quer zu einer Erstreckungsrichtung des Implantats, Längsachse) aufnehmbar sind. Rotationsmomente um die Längsachse des Implantats (also in Erstreckungsrichtung des Implantats) sowie Axialkräfte können, müssen aber nicht zwangsläufig von dieser Halteeinrichtung aufgenommen werden. So kann die Halteeinrichtung z.B. derart ausgebildet sein, dass ein Ringspalt zwischen dem Aufbaubereich und der Halteeinrichtung vorgesehen ist, um Verklemmungen zu vermeiden. Die Halteeinrichtung kann sich auch über den Aufbaubereich in Richtung Verankerungsbereich hinaus erstrecken, jedoch nur soweit, dass ein Biegevorgang gewährleistet ist.

In einer Ausführungsform weist die Halteeinrichtung eine Hülse auf, die derart angeordnet ist, dass ein im Ober- oder Unterkiefer verankertes Implantat über eine im Gebrauch zum Implantat weisende Öffnung der Hülse in die Hülse aufnehmbar ist. Die Hülsenstruktur erlaubt eine biegemomentenstabile Aufnahme des Aufbaubereichs (ggf. auch nur die Aufnahme zumindest eines Teils des Aufbaubereichs), so dass bei Krafteinleitung durch die Stützeinrichtung an dem Auflagerbereich ein sicherer Halt gewährleistet ist (bzgl. Biegemomenten, nicht bzgl. Rotationsmomenten). Alternativ ist der Aufbaubereich oder zumindest ein Teil des Aufbaubereichs auch kraftschlüssig einspannbar oder klemmbar, so dass dort ein Moment eingeleitet werden kann.

Unabhängig davon, ob das Implantat verankert ist, kann es in die Halteeinrichtung aufgenommen werden. Gleiches gilt für einen sonstigen Gegenstand, der frei zugänglich ist oder mit einem Ende verankert ist.

Vorzugsweise ist die Hülse auswechselbar an dem distalen Ende des ersten Schenkels angeordnet, so dass verschieden Implantate mit verschiedenen Formen und Größen des Aufbaubereichs biegbar sind. Unterschiedliche Ausführungen des Aufbaubereichs oder verschiedene Bauhöhen des Biegebereichs können wegen unterschiedlicher Dicken der Mundschleimhaut notwendig werden.

Der Aufbaubereich des Implantats ist beispielsweise, wie bereits oben erwähnt, als konusförmiges Element ausgebildet und eignet sich zur Aufnahme in die Halteeinrichtung, hier z.B. in die Hülse. Im Falle der konusförmigen Ausgestaltung des Aufbaubereichs kann die Hülse so ausgebildet sein, dass z.B. ein zirkulärer Ringspalt zwischen dem aufgenommenem Aufbaubereich des Implantats und der Hülse vorgesehen ist, um eine Verklemmung des Implantats in der Hülse zu vermeiden. Ringspalte können im Bereich von 0,01 mm bis 0,5 mm als geeignete Maße vorgesehen sein, vorzugsweise ist ein Spalt von 0,05 mm vorgesehen.

Die Stützeinrichtung ist in einer Ausführungsform derart ausgebildet, dass über diese eine Krafteinleitung in das Implantat erfolgt und dass diese ggf. das Implantat in der Vorrichtung positioniert. Die Stützeinrichtung kontaktiert im Gebrauch das Implantat im Auflagerbereich und leitet dort durch die Relativbewegung der Schenkel die Biegekraft ein. Im Falle eines Ringspaltes in der Halteeinrichtung bzw. Hülse positioniert die Stützeinrichtung das Implantat zusätzlich in axialer Richtung. Die Vorrichtung ist einfach zu handhaben, zudem ist zur sicheren Verwendung der Vorrichtung keine vollständige Sichtkontrolle in dem einblutenden Operationsfeld notwendig, da die Ausgestaltung der Stützeinrichtung dies nicht erfordert.

In einer Ausführungsform ist die Stützeinrichtung als ein einteiliges Element ausgebildet. In einer weiteren Ausführungsform ist die Stützeinrichtung als ein hakenförmiges Element ausgebildet.

In einer Ausführungsform ist die Stützeinrichtung derart ausgebildet und/oder angeordnet, dass die Kraft, im Gebrauch der Stützeinrichtung oder auch im Gebrauch der Vorrichtung, also bei in die Vorrichtung eingebrachtem Implantat, in den Auflagerbereich einseitig, vorzugsweise ausschließlich einseitig, und/oder in Biegerichtung, in die das Implantat gebogen wird, vorzugsweise ausschließlich in Biegerichtung, einleitbar ist. Das heißt, sobald das Implantat in die Vorrichtung zum Biegen eingeführt ist, kann die Stützeinrichtung entsprechend ansetzen, so dass der Biegevorgang durchführbar ist.

In einer Ausführungsform ist die Stützeinrichtung derart ausgebildet und/oder angeordnet, dass diese ausschließlich an einen einzelnen Abschnitt des Auflagerbereichs des Implantats, vorzugsweise punktuell oder lokal, ansetzbar ist. Das heißt, der Haken bzw. das hakenförmige Element greift im Gebrauch am Implantat in den Auflagerbereich (z.B. Rille) ein oder an diesen an, und berührt diesen.

In einer Ausführungsform ist die Stützeinrichtung derart ausgebildet und/oder angeordnet, dass mit dieser ein Abschnitt des Auflagerbereichs klemmungsfrei, vorzugsweise ausschließlich klemmungsfrei, erfassbar ist. Wie bereits oben beschrieben ist eine Krafteinleitung nur in Biegerichtung erforderlich. Durch die Halterung des Implantats in der Halteeinrichtung kann so auf einfache Weise die Biegung in die gewünschte Richtung erfolgen.

In einer Ausführungsform ist die Stützeinrichtung derart ausgebildet und/oder angeordnet, dass mit dieser (im Gebrauch) der Auflagerbereich ausschließlich an einem Abschnitt erfassbar ist, der auf der zu dehnenden Seite des Implantats oder Gegenstands angeordnet ist. Wenn das Implantat also in der Vorrichtung positioniert ist, erfolgt das Angreifen der Stützeinrichtung derart, dass ausschließlich der zu dehnende Bereich des Implantats der Stützeinrichtung zugewandt ist.

In einer Ausführungsform ist die Stützeinrichtung derart angeordnet, dass sie in Richtung distales Ende der Vorrichtung weist, in einer weiteren Ausführungsform ist Stützeinrichtung derart angeordnet, dass sie in Richtung proximales Ende der Vorrichtung weist. Die Ausführungsform, bei welcher die Stützeinrichtung in Richtung distales Ende der Vorrichtung weist, ermöglicht eine Biegung des Implantats in Richtung Mundhöhle, während die Ausführungsform, bei welcher die Stützeinrichtung in Richtung proximales Ende der Vorrichtung weist, eine Biegung des Implantats in Richtung Mundöffnung ermöglicht.

Durch eine Schließbewegung der Zangenschenkel wird der kontrollierte Biegevorgang also entweder in Richtung Mundöffnung oder in Richtung Mundhöhle durchgeführt, da es für die Anwendung der Biegevorrichtung am Patienten notwendig ist, dass Implantate sowohl in Richtung Mundöffnung, als auch in Gegenrichtung, d.h. in Richtung Mundhöhle, gebogen werden können.

Dadurch, dass die Stützeinrichtung als ein einteiliges Element, z.B. als ein hakenförmiges Element ausgebildet ist, das das Implantat klemmungsfrei fassen kann, ist die schonende Behandlung der Implantationsumgebung gegeben. Wie bereits oben angemerkt, ist es ausreichend, die Umgebung am Kieferkamm, also z.B. die Umgebung des kragenförmigen Bereichs, nur partiell, d.h. im Bereich des Angriffs der Stützeinrichtung freizulegen, was die schonende Behandlung des umgebenden Gewebes erlaubt. Das heißt, die Stützeinrichtung ist in ihren Ausmaßen so gering wie möglich ausgebildet, um einerseits die Implantationsregion möglichst wenig zu beeinflussen und andererseits die Ausgestaltung der Vorrichtung zum Biegen (Biegevorrichtung) so einfach wie möglich zu halten.

In einer Ausführungsform weist die Vorrichtung eine Führungseinrichtung zum gelenkig miteinander Verbinden der Schenkel und zum Bewegen der Schenkel relativ zueinander, vorzugsweise bogenförmig relativ zueinander, auf. Die Führungseinrichtung bildet so eine Art Gelenk. Das heißt, die Führungseinrichtung weist Elemente auf, die derart ineinandergreifen, dass eine Relativbewegung, vorzugsweise eine bogenförmige Relativbewegung, zwischen den Schenkeln und damit zwischen der Halteeinrichtung und der Stützeinrichtung möglich ist.

In einer Ausführungsform weist die Führungseinrichtung mindestens eine Führungsbahn auf (diese kann als Führungsschlitz oder Führungsnut ausgebildet sein), die an dem distalen Ende des zweiten Schenkels angeordnet ist, sowie mindestens ein Führungselement, das an dem distalen Ende des ersten Schenkels angeordnet ist, wobei das Führungselement in der Führungsbahn zum gelenkig miteinander Verbinden der Schenkel und zum Bewegen der Schenkel relativ zueinander, vorzugsweise bogenförmigen relativ zueinander, führbar ist.

In einer Ausführungsform weist die Führungseinrichtung Folgendes auf: ein erstes Plattenelement mit mindestens einer ersten Führungsbahn und ein zweites Plattenelement mit mindestens einer zweiten Führungsbahn an dem distalen Ende des zweiten Schenkels, die sich einander beabstandet gegenüberliegen, so dass zwischen dem ersten Plattenelement und dem zweiten Plattenelement ein Hohlraum ausgebildet ist. Zudem weist die Führungseinrichtung mindestens ein Führungselement an dem distalen Ende des ersten Schenkels auf, das derart in dem Hohlraum angeordnet ist, dass das Führungselement sowohl in die erste Führungsbahn als auch in die zweite Führungsbahn eingreift und in den Führungsbahnen führbar ist. In einer Ausführungsform erstreckt sich die Halteeinrichtung an dem distalen Ende des ersten Schenkels durch den Hohlraum. Vorzugsweise ist also das Führungselement zusammen mit der Halteeinrichtung an dem distalen Ende des ersten Schenkels angeordnet.

Statt der Plattenstruktur kann auch eine andere Bauform vorgesehen sein, z.B. auch eine offene Bauform. So kann auch nur ein Plattenelement vorgesehen sein oder z.B. eine fliegende Lagerung. Vorzugsweise ist vorgesehen, dass die Plattenelemente oder auch ein Plattenelement, die Stützeinrichtung tragen bzw. trägt, wobei die Halteeinrichtung an dem Plattenelement oder den Plattenelementen führbar ist.

Plattenförmigen Strukturen haben hinsichtlich der geringen Größe und Ausmaße deutliche Vorteile gegenüber anderen Formen. Die Anordnung und die Art der Zusammenstellung der Komponenten, also z.B. der plattenförmigen Elemente, der Stützeinrichtung und der Halteeinrichtung, erlauben die Bereitstellung einer platzsparenden Anordnung, wobei das präzise Zusammenwirken der Einheiten gewährleistet ist.

Die Führungsbahn bildet also eine Öffnung oder eine Nut, in die das Führungselement aufnehmbar ist. Die Bewegung der Halteeinrichtung und der Stützeinrichtung folgen einer Bahnkurve, der Bahnkurve der Führungsbahn, entsprechend dem Verlauf der Biegelinie des Biegebereichs des Implantats. Die Bahnkurve (und damit die Führungsbahn) kann kreisförmig sein, kann aber auch eine andere Bahnkurve sein, angepasst an die Biegelinie des Biegebereichs, z.B. ellipsenförmig.

Somit ist z.B. eine Kulissenführung bereitgestellt, die als Gelenk zwischen den Schenkeln dient und es ermöglicht, die Schenkel auf definierte Weise relativ zueinander, entsprechend einer Zange zu bewegen. Der Schenkel mit der festen Einspannung (Halteeinrichtung) bewegt sich so auf einer definierten Bahn gegenüber dem Schenkel, der die Stützeinrichtung trägt. Der Drehpunkt der geführten Bewegung liegt mit Vorzug in der Nähe der momentenfesten Einspannung (nahe dem dem Aufbaubereich zugewandten Ende des Biegebereichs) und ist fest, kann aber auch variabel sein.

In einer Ausführungsform ist die Stützeinrichtung als ein das erste Plattenelement und das zweite Plattenelement verbindendes Element ausgebildet.

In einer Ausführungsform sind zwei Führungselemente derart an dem distalen Ende des ersten Schenkels angeordnet, dass die Halteeinrichtung zwischen den Führungselementen angeordnet ist. Bevorzugt sind die Führungselemente symmetrisch in Bezug auf die Halteeinrichtung angeordnet.

In einer Ausführungsform ist das Führungselement oder sind die Führungselemente als zapfenförmige Elemente ausgebildet. Damit ist ein sicherer Eingriff in den oder die Führungsbahnen gewährleistet. Auch andere Elemente, wie z.B. eine gekrümmte Passfeder können verwendet werden.

In einer Ausführungsform ist eine Skala bzw. Messskala oder Skalierung entlang der ersten Führungsbahn, vorzugsweise an dem ersten Plattenelement und/oder entlang der zweiten Führungsbahn, vorzugsweise an dem zweiten Plattenelement angeordnet. Eine Markierung ist dann vorzugsweise an dem distalen Ende des ersten Schenkels derart angeordnet, dass ein Biegewinkel des Implantats (oder auch des Gegenstandes), d.h. ein Winkel zwischen dem Aufbaubereich und dem Verankerungsbereich, anzeigbar ist. Somit ist eine zusätzliche visuelle Kontrolle des Biegevorgangs vorgesehen.

In einer Ausführungsform ist an der Halteeinrichtung eine Zeigereinrichtung angeordnet oder anordenbar, derart, dass eine Orientierung des Implantats, insbesondere des Aufbaubereichs des Implantats, in Bezug auf die Zahnreihe eines Patienten anzeigbar ist. Das heißt, auch hiermit kann der Biegevorgang zusätzlich visuell kontrolliert werden.

In einer Ausführungsform weist die Führungsbahn oder jede der Führungsbahnen einen Erweiterungsbereich auf, der als vergrößerter Bereich an einem Ende der Führungsbahn oder von jeder Führungsbahn derart ausgebildet und angeordnet ist, dass das dem jeweiligen Erweiterungsbereich zugewandte Führungselement, also z.B. das zapfenförmige Element, in den jeweiligen Erweiterungsbereich bei maximaler Öffnung der Schenkel aufnehmbar ist. Damit wird an dem entsprechenden Ende der jeweiligen Führungsbahn, z.B. des Führungsschlitzes, ein gewisses Spiel zugelassen, um das zapfenförmige Element in diesem Bereich auszulenken. Somit ist die Stützeinrichtung so weit von der Öffnung der Halteeinrichtung entfernbar, dass das Implantat bzw. dessen Aufbaubereich ohne Behinderung in die Halteeinrichtung einführbar ist. Nach Aufnahme des Implantats gleitet das Führungselement durch den Schließvorgang der Schenkel in die spielfreie Führung zurück. Auch bei Anordnungen, die nur eine Führungsbahn oder dergleichen Einrichtung aufweisen, weist diese vorzugsweise einen entsprechenden Erweiterungsbereich auf.

Die Biegevorrichtung ist wegen der hohen Anforderungen an die Festigkeit vorzugsweise aus einem (ggf. auch mehreren) hochfesten Instrumentenstahl herzustellen.

### Ferner offenbart ist ein Verfahren zum Biegen eines

Implantats, vorzugsweise eines einteiligen Implantats. Das Implantat ist im menschlichen (ggf. auch im tierischen) Ober- oder Unterkiefer verankert oder auch zur Verankerung im menschlichen (ggf. auch im tierischen) Ober- oder Unterkiefer vorgesehen. Das Verfahren weist die folgenden Schritte auf:
- Bereitstellen einer Vorrichtung zum Biegen eines Implantats, mit einem ersten Schenkel und einem zweiten Schenkel, die gelenkig miteinander verbunden und entsprechend einem Scheren- oder Zangenwerkzeug betätigbar sind,
- Biegemomentenstabiles Fixieren eines Aufbaubereichs des Implantats oder von mindestens einem Teil des Aufbaubereichs des Implantats mittels einer Halteeinrichtung der Vorrichtung, wobei die Halteeinrichtung an einem distalen Ende des ersten Schenkels angeordnet ist,
- Einleiten einer Kraft in einen Auflagerbereich des Implantats mittels einer Stützeinrichtung der Vorrichtung, wobei die Stützeinrichtung an einem distalen Ende des zweiten Schenkels angeordnet ist,
- Betätigen des ersten Schenkels und des zweiten Schenkels der Vorrichtung, derart, dass die Halteeinrichtung und die Stützeinrichtung relativ, vorzugsweise bogenförmig relativ zueinander bewegt werden.

### Ferner offenbart ist ein Verfahren zum Biegen eines

Implantats, vorzugsweise eines einteiligen Implantats. Das Implantat ist im menschlichen (ggf. auch im tierischen) Ober- oder Unterkiefer verankert oder auch zur Verankerung im menschlichen (ggf. auch im tierischen) Ober- oder Unterkiefer vorgesehen. Das Verfahren weist die folgenden Schritte auf:
- Bereitstellen einer Vorrichtung zum Biegen eines Implantats, mit einem ersten Schenkel und einem zweiten Schenkel, die gelenkig miteinander verbunden und entsprechend einem Scheren- oder Zangenwerkzeug betätigbar sind,
- Fixieren eines Aufbaubereichs des Implantats oder von mindestens einem Teil des Aufbaubereichs des Implantats mittels einer Halteeinrichtung der Vorrichtung, wobei die Halteeinrichtung an einem distalen Ende des ersten Schenkels angeordnet ist,
- Ansetzen einer Stützeinrichtung der Vorrichtung an einen Auflagerbereich des Implantats, wobei die Stützeinrichtung an einem distalen Ende des zweiten Schenkels angeordnet ist,
- Betätigen des ersten Schenkels und des zweiten Schenkels der Vorrichtung, derart, dass die Halteeinrichtung und die Stützeinrichtung relativ, vorzugsweise bogenförmig relativ zueinander bewegt werden.

Somit wird das im Kieferknochen eines Patienten verankerte Implantat bei einer Schließbewegung der Schenkel positioniert und gebogen. Grundsätzlich lässt sich eine Biegung auch ohne Verankerung des Implantats durchführen. Gleiches gilt für einen anderen hierfür geeigneten Gegenstand.

### Kurzbeschreibung der Zeichnungen

Nachfolgend werden Ausführungsbeispiele der Erfindung anhand von Abbildungen näher erläutert. Hierbei zeigen:
- Fig. 1: eine Ausführungsform eines erfindungsgemäßen Implantats,
- Fig. 2A: einen Abschnitt des Implantats aus Fig. 1,
- Fig. 2B: ein Diagramm: Verlauf des Biegemoments,
- Fig. 3: eine weitere Ausführungsform eines erfindungsgemäßen Implantats,
- Fig. 4: eine weitere Ausführungsform eines erfindungsgemäßen Implantats,
- Fig. 5A: eine Ausführungsform einer erfindungsgemäßen Vorrichtung zum Biegen eines Implantats in einer Schnittdarstellung,
- Fig. 5B: eine weitere Ausführungsform einer erfindungsgemäßen Vorrichtung zum Biegen eines Implantats in einer Schnittdarstellung,
- Fig. 6A: die Ausführungsform gemäß Fig. 5A in perspektivischer Ansicht,
- Fig. 6B: die Ausführungsform gemäß Fig. 5B in perspektivischer Ansicht,
- Fig. 7A: die Ausführungsform gemäß Fig. 5A in Seitenansicht,
- Fig. 7B: die Ausführungsform gemäß Fig. 5B in Seitenansicht,
- Fig. 8: einen Abschnitt der Stützeinrichtung, im Schnitt, in Seitenansicht;
- Fig. 9: einen Abschnitt der Stützeinrichtung, in einer Ansicht von unten;
- Fig. 10: einen Vergleich: Stand der Technik - erfindungsgemäße Vorrichtung zum Biegung eines Implantats.

### Beschreibung bevorzugter Ausführungsformen

In der nachfolgenden Beschreibung werden für gleiche und gleich wirkende Teile dieselben Bezugsziffern verwendet.

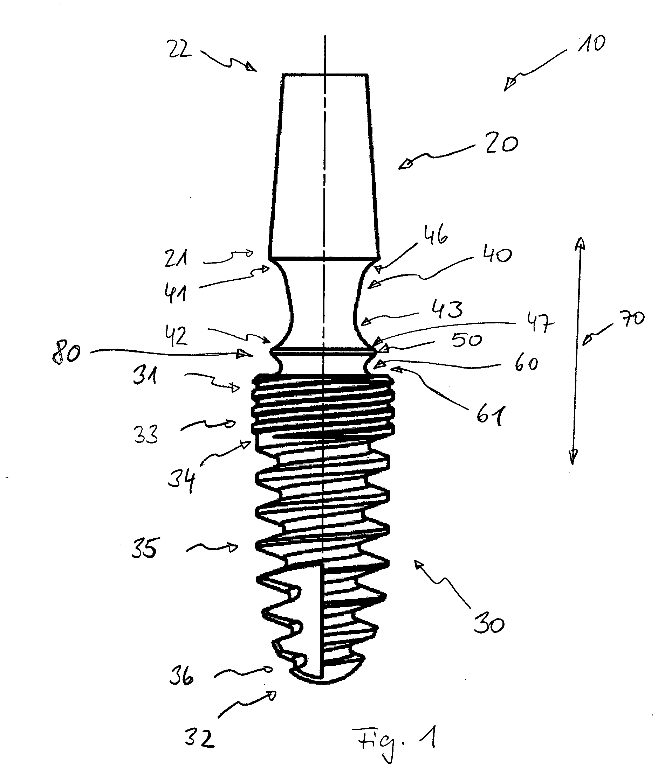

Fig. 1 zeigt eine Ausführungsform eines erfindungsgemäßen Implantats 10 mit einem Aufbaubereich 20, auch als Abutment bezeichnet, der derart ausgebildet ist, dass eine zahnprothetische Konstruktion (nicht gezeigt) an diesem befestigbar ist. Zudem ist die Geometrie einer künstlichen Zahnwurzel bzw. eines Verankerungsbereichs 30 gezeigt. Ein dem Aufbaubereich zugewandtes Ende 31 des Verankerungsbereichs 30 wird nach der Implantation z.B. auf oder (leicht) unterhalb eines Knochenniveaus 80 liegen. Ferner ist ein Biegebereich 40, auch als Biegezone bezeichnet, vorgesehen, ein kragenförmiges Element 50 sowie ein Auflagerbereich 60.

Der Aufbaubereich 20 weist ein dem Verankerungsbereich zugewandtes Ende 21 sowie ein freies Ende oder koronales Ende 22 auf. Der Verankerungsbereich 30 weist das dem Aufbaubereich zugewandte Ende 31 sowie ein freies Ende oder enossales Ende 32 auf.

Der Biegebereich 40 ist zwischen dem Aufbaubereich 20 und dem Verankerungsbereich 30 angeordnet, genauer zwischen dem Aufbaubereich 20 und dem kragenförmigen Element 50. Der Biegebereich 40 weist ein dem Aufbaubereich zugewandtes Ende 41 sowie ein dem Verankerungsbereich zugewandtes Ende 42 auf. Das kragenförmige Element 50 schließt sich an den Biegebereich 40 an, an dessen dem Verankerungsbereich zugewandten Ende 42. Der Auflagerbereich 60 wiederum schließt sich an das kragenförmige Element 50 an, und ist somit zwischen dem kragenförmigen Element 50 und dem Verankerungsbereich 30 angeordnet.

In der in Fig. 1 gezeigten Ausgestaltung des Implantats 10 ist der Aufbaubereich 20 als ein Aufbaukonus oder konusförmiges Teil oder Element ausgebildet, der bzw. das sich hin zu dem freien oder koronalen Ende 22 des Aufbaubereichs 20 verjüngt. Konische Elemente ermöglichen eine stabile Verbindung, hier von Aufbaubereich 20 und prothetischer Konstruktion (nicht gezeigt).

Der Verankerungsbereichs 30 weist einen ersten Gewindeabschnitt 33 und einen zweiten Gewindeabschnitt 35 auf, wobei der erste Gewindeabschnitt 33 zwischen dem Auflagerbereich 60 und dem zweiten Gewindeabschnitt 35 angeordnet ist. Der erste Gewindeabschnitt 33 ist in dieser Ausführungsform als ein zweigängiges Gewinde mit einer geringeren Flankentiefe (im Vergleich zu einer Flankentiefe des zweiten Gewindeabschnitts) für die Verankerung im festeren, kortikalen Anteil des Kieferknochens ausgebildet, während der zweite Gewindeabschnitt 35 als ein eingängiges Gewinde mit grösserer Flankentiefe für die Verankerung im spongiösen Bereich des Kieferknochens ausgebildet ist. Beide Gewindeabschnitte haben hier die gleiche Steigung, damit bei der Insertion des Schraubenprofils keine Konflikte auftreten.

Jeder der Gewindeabschnitte kann eine Schneidkante aufweisen, der erste Gewindeabschnitt 33 die Schneidkante 34 und der zweite Gewindeabschnitt 35 die Schneidkante 36. Die Schneidkanten sind an den jeweiligen, vom Aufbaubereich wegweisenden Enden der Gewindeabschnitte angeordnet (apikale Enden). Die Gewindeabschnitte 33, 35 sind so als selbstschneidende Gewinde vorgesehen.

Wie bereits oben beschrieben, sind die Schneidkanten 34, 36 an den Gewindeflanken (und etwaige Spannuten) so ausgebildet, dass sich das Implantat mit zunehmender Eindrehtiefe in den Kieferknochen eine Gewindestruktur selbst ausformt. Das Eindrehen erleichtert eine vorgeformte Kavität. Das so entstehende Knochengewinde entsteht durch Zerspanen oder durch Verdrängen, wodurch die Eindrehcharakteristik und die Verklemmeigenschaften, d.h. die Primärstabilität, bestimmt werden.

Neben der gewindeförmigen Makrostruktur ist der Bereich der künstlichen Zahnwurzel vorzugsweise mit einer insbesondere aufgerauten Mikrostruktur, hergestellt durch Auftrag oder gezielten Abtrag, vorgesehen. Diese rauen Strukturen dienen einerseits der Anregung des Knochenanwachsens, andererseits der dauerhaften festen Verzahnung mit dem Knochen nach der Einheilphase. Derartige Mikrostrukturen werden z.B. durch Strahlverfahren, durch Ätzverfahren oder durch eine Kombination dieser beiden abtragenden Verfahren oder durch ein auftragendes Verfahren, z.B. Beschichtung mit einer Titan-Plasma-Spritzschicht, erzeugt.

Das hier dargestellte Gewinde (Gewindeabschnitte) ist ein mit zunehmender Eindrehtiefe sich selbst im Knochenlager verspannendes, so genanntes Expansionsgewinde, welches zusätzlich zum kegelförmigen Gewindegrund über eine sich über die Gewindelänge ändernde Flankengeometrie verfügt. Neben Gewinden mit zylindrischer Außenform und kegelförmigem Gewindegrund sind auch Gewinde mit kegelförmiger Außengeometrie und zylindrischem oder kegelförmigem Gewindegrund möglich. Alternativ zu diesen Gewindeformen sind auch andere Gewindeformen denkbar, so z.B. Gewindeformen, welche sich gut für selbstschneidende Gewinde eignen.

Der Biegebereich 40 weist eine eingeschnürte Geometrie auf, mit einem kleinsten Querschnitt 43, der in einer dem Verankerungsbereich 30 zugewandten Hälfte des Biegebereichs 40 angeordnet ist. Der Querschnitt des Biegebereichs ist in dieser Ausführungsform ausgehend von dem kleinsten Querschnitt 43 hin zu dem dem Aufbaubereich zugewandten Ende 41 des Biegebereichs sich kontinuierlich vergrößernd ausgebildet. Der Biegebereich 40 ist hier konisch ausgebildet (jeweils konisch sich verbreiternd, ausgehend vom kleinsten Querschnitt). Möglich ist auch eine konkavförmige oder konvexförmige Vergrößerung oder Erweiterung des Querschnitts. Das Ende 41 des Biegebereichs, das dem Aufbaubereich 20 zugewandt ist, weist einen Radius oder eine radiusförmige Geometrie 46 auf, zur Vermeidung von Kerben. Die kontinuierliche Vergrößerung ist auch über die radiusförmige Geometrie fortgesetzt.

Aufgrund der speziellen Ausgestaltung des Biegebereichs 40 erfährt der Biegebereich 40 bei entsprechender Biegebeanspruchung eine gezielt verteilte plastische Deformation, die nichtwerkstoffschädigend ist.

Auch ist der Querschnitt des Biegebereichs in dieser Ausführungsform ausgehend von dem kleinsten Querschnitt 43 hin zu dem dem Verankerungsbereich zugewandten Ende 42 des Biegebereichs sich kontinuierlich vergrößernd ausgebildet. Zwischen dem kleinsten Querschnitt 43 und dem Ende 42 des Biegebereichs 40, das dem Verankerungsbereich 30 zugewandt ist, ist ebenfalls eine radiusförmige Geometrie, eine zweite radiusförmige Geometrie 47, angeordnet, die die kontinuierliche Vergrößerung des Querschnitts des Biegebereichs bewirkt. Somit ist ein sanfter Übergang in Richtung Verankerungsbereich gewährleistet und der Biegebereich weist an seinem dem Verankerungsbereich zugewandten Ende 42 eine ausreichend hohe Stabilität auf.

Das heißt, zur Vermeidung von Kerben ist auch hier die Endzone des Biegebereichs mit einem Radius oder der radiusförmigen Geometrie 47 ausgebildet, was die Vergrößerung des Querschnitts ausgehend vom kleinsten Querschnitt 43 hin zum Ende des Biegebereichs in Richtung Verankerungsbereich bewirkt. Damit ist der kleinste Querschnitt 43 an der radiusförmigen Geometrie an dem dem Verankerungsbereich zugewandten Ende 42 des Biegebereichs 40 angeordnet.

An den Biegebereich 40 schließt sich das kragenförmige Element 50 an. Der Biegebereich 40 dient aufgrund seiner Ausgestaltung, neben der Ausgestaltung als Biegezone, auch der Anlagerung der Mundschleimhaut. Durch die verjüngte Geometrie und den anschließenden Kragen (kragenförmiges Element) 50 entsteht eine Barriere gegen das Eindringen von Keimen aus dem Mundraum in den Bereich der knöchernen Verankerung in Form einen Labyrinthes. Zudem dient das kragenförmige Element 50 als Versteifung. Das heißt, im Bereich des kragenförmigen Elements 50 des Implantats 10 ist die erzielte Deformation bei Biegung des Biegebereichs 40 wegen der versteifenden Wirkung gleich Null.

Schließlich weist das Implantat 10 den Auflagerbereich 60 auf. In dieser Ausführungsform ist der Auflagerbereich 60 als nutförmiger Bereich oder auch als nutförmiges Element, z.B. eine Rille, ausgebildet und damit vertieft gegenüber der Umgebung vorgesehen. Der Auflagerbereich 60 ist dafür vorgesehen, eine Vorrichtung zum Biegen des Implantats über diese Zone (Auflagerbereich) aufzunehmen. Der nutförmige Bereich bildet somit einen Lagerbereich (Auflagerbereich), in dem die Vorrichtung angreifen kann.

Zur Biegung des Implantats ist zudem ein weiterer Lagerbereich (momentenstabiler Lagerbereich) vorgesehen, an dem die Vorrichtung zum Biegen angreifen kann, hier z.B. an dem freien Ende 22 des Aufbaubereichs 20. In der Praxis ist es zweckmäßig, dass der gesamte Aufbaubereich als Lagerbereich dient. Somit lässt sich das Implantat über die beiden Lagerbereiche in geeigneter Weise fassen bzw. in der Vorrichtung positionieren und anschließend in die gewünschte Form bringen.

Das Implantat erstreckt sich in einer Erstreckungsrichtung oder Längsrichtung 70. Der jeweilige Querschnitt des Implantats (hier wesentlich des Biegebereichs) erstreckt sich quer zur Erstreckungsrichtung 70.

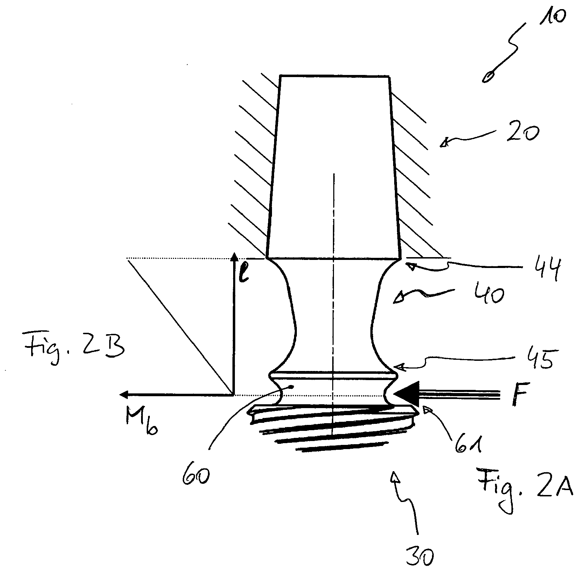

Fig. 2A zeigt einen Abschnitt des Implantats aus Fig. 1, insbesondere Aufbaubereich 20, Biegebereich 40, kragenförmiges Element 50 und Auflagerbereich 60. Nähere Details hierzu sind mit den nachfolgenden Ausführungen dargelegt.

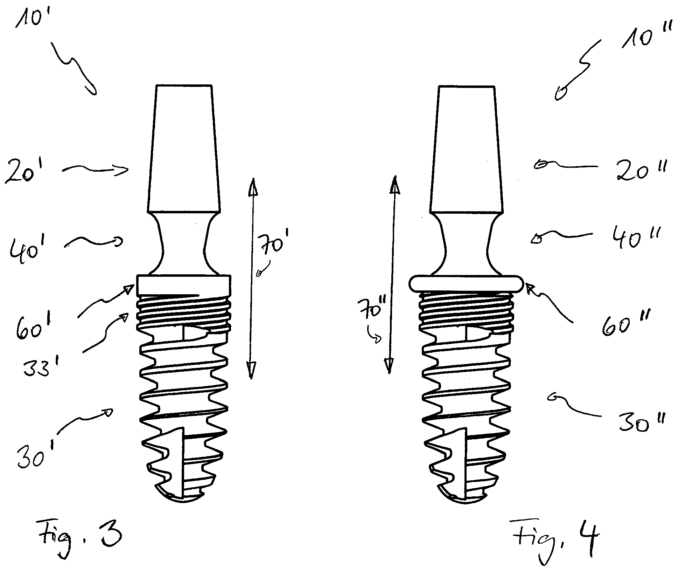

Die Fig. 3 und 4 zeigen alternative Ausführungsformen des Implantats. Figur 3 zeigt Implantat 10' mit Aufbaubereich 20', Verankerungsbereich 30' und Biegebereich 40'. Die übrigen Komponenten des Implantats entsprechen denjenigen aus Fig. 1 und werden daher nicht nochmals explizit beschrieben. Ein Auflagerbereich 60' ist hier gegenüber dem Biegebereich 40' als vergrößerter Bereich ausgebildet, der z.B. in dieser Ausführungsform der Form und dem Durchmesser eines ersten Gewindeabschnitts 33' des Verankerungsbereichs 30' entspricht und ist z.B. scheibenförmig ausgebildet. Der Kantenbereich des Auflagerbereichs 60' ist hier in Erstreckungsrichtung 70' des Implantats 10' gerade ausgebildet. Auch größere oder kleinere Ausgestaltungen, sowohl in der Erstreckungsrichtung 70' als auch quer zu dieser wären möglich. Es ist auf die Implantationsregion im Kiefer abzustellen.

Figur 4 zeigt ein Implantat 10" mit Aufbaubereich 20", Verankerungsbereich 30" und Biegebereich 40". Die übrigen Komponenten des Implantats entsprechen denjenigen aus Fig. 1 und werden daher nicht nochmals explizit beschrieben. Auch hier ist ein Auflagerbereich 60" scheibenförmig ausgebildet, allerdings ist der Kantenbereich abgerundet ausgebildet, d.h., wölbt sich nach außen hervor. In dieser Ausführungsform steht der Auflagerbereich 60" über den Verankerungsbereich 30" quer zu einer Erstreckungsrichtung 70" des Implantats 10" hervor.

In beiden Fällen ist aufgrund der Ausgestaltung der Auflagerbereiche kein explizites kragenförmiges Element vorgesehen. Insbesondere durch die Ausgestaltung des Auflagerbereichs 60" gemäß Fig. 4 ist dennoch ein Hindernis vorgesehen (aber auch durch den Auflagerbereich 60'), das das Eindringen von Keimen in den Kieferbereich verhindern kann. Sowohl der Auflagerbereich 60' als auch der Auflagerbereich 60" können auch als eine Art kragenförmiges Element gesehen werden.

Wie Fig. 1 zu entnehmen ist, ist ein kleinster Querschnitt des Auflagerbereichs 60 größer ausgebildet als der kleinste Querschnitt 43 des Biegebereichs 40. Dies begünstigt die definierte Biegeoperation. Auch bei den Implantaten 10' und 10" gemäß der Fig. 3 und 4 sind kleinste Querschnitte der Auflagerbereiche 60', 60" größer ausgebildet, als der kleinste Querschnitt des Biegebereichs.

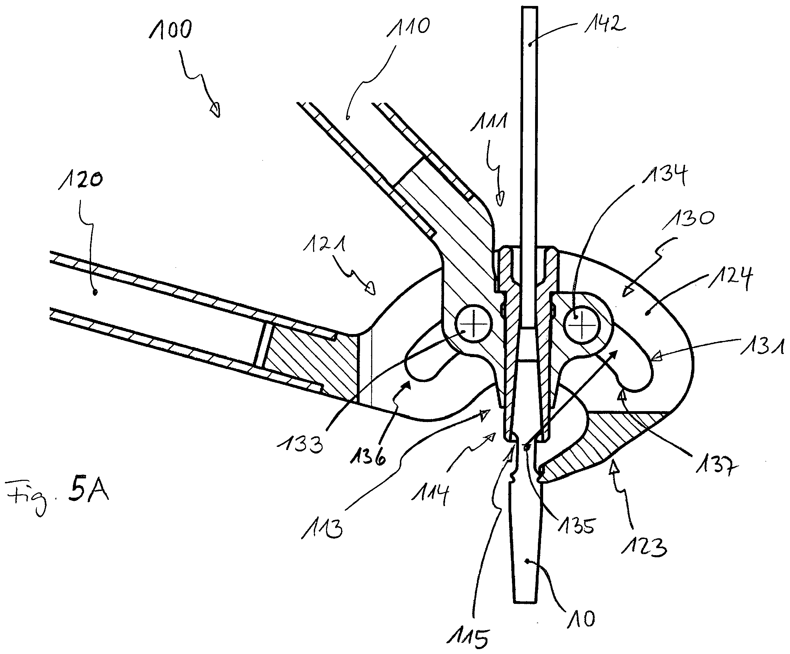

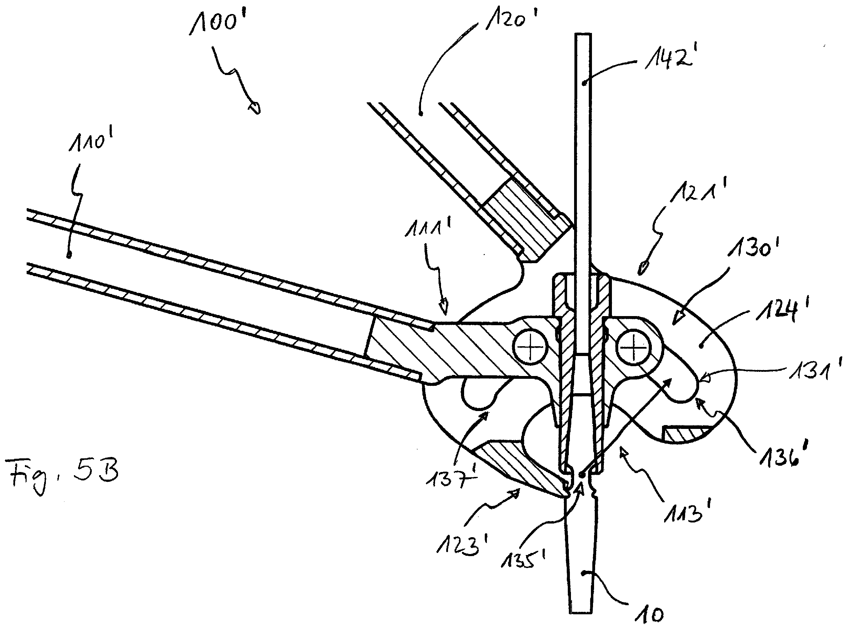

Fig. 5A zeigt eine Ausführungsform einer erfindungsgemäßen Vorrichtung 100 zum Biegen eines Implantats, Fig. 5B zeigt eine weitere Ausführungsform 100' einer erfindungsgemäßen Vorrichtung zum Biegen eines Implantats. Die Ausführungsform gemäß Fig. 5A zeigt eine Vorrichtung zum Biegen eines Implantats, wie es z.B. oben beschrieben ist, wobei die Vorrichtung derart ausgebildet ist, dass die Biegung des Implantats, d.h. des Aufbaubereichs gegenüber dem Verankerungsbereich über den Biegebereich, in Richtung Mundöffnung (hin zum Bediener) erfolgt. Die Anordnung gemäß Fig. 5B erlaubt eine Biegung in Richtung Mundhöhle (weg vom Bediener).

Im Folgenden wird zwischen den Ausführungsformen gemäß der Fig. 5A, 6A und 7A einerseits und gemäß der Fig. 5B, 6B und 7B andererseits unterschieden, so dass für die Vorrichtung zum Biegen in Richtung Mundöffnung (Fig. 5A, 6A und 7A) das Bezugszeichen 100 verwendet wird, während für die Vorrichtung zum Biegen in Richtung Mundhöhle (Fig. 5B, 6B und 7B) das Bezugszeichen 100' verwendet wird. Entsprechendes gilt für die einzelnen Bauteile, auch wenn diese in den Fig. 5B, 6B und 7B unter Umständen nicht vollständig angegeben sind (da bereits in den Fig. 5A, 6A und 7A verdeutlicht).

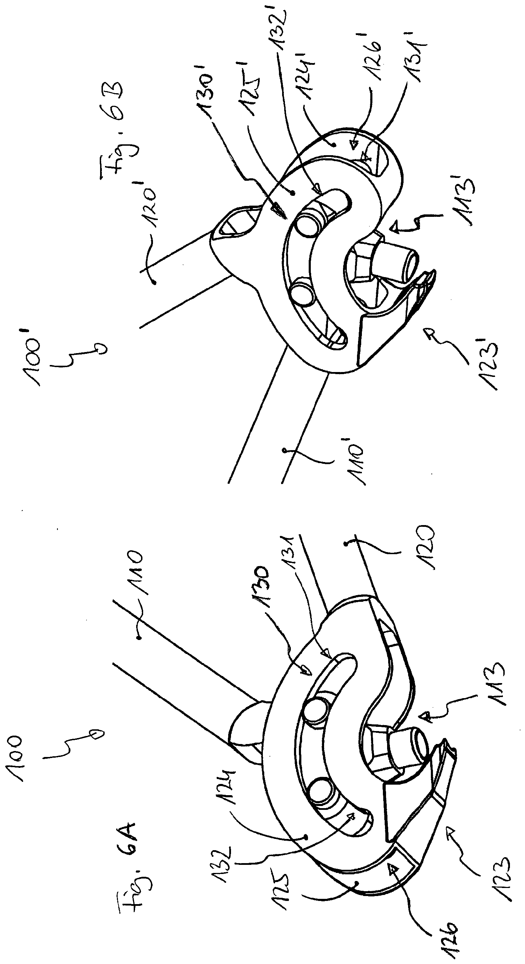

Die Fig. 6A und 6B zeigen die Ausführungsformen gemäß der Fig. 5A und 5B in perspektivischer Ansicht.

Die Vorrichtung zum Biegen des Implantats, auch als Biegevorrichtung, Biegeinstrument oder Biegezange bezeichnet, wird nachfolgend anhand der Fig. 5A und 6A im Detail beschrieben. Wie Fig. 5A zu entnehmen ist, weist die Vorrichtung eine erste Branche oder einen ersten Schenkel 110 sowie eine zweite Branche oder einen zweiten Schenkel 120 auf. An einem distalen Ende 111 des ersten Schenkels 110 ist eine Halteeinrichtung 113 vorgesehen, zur Aufnahme des Aufbaubereichs 20 z.B. des Implantats 10, 10', 10", wie oben mit den Fig. 1 bis 4 beschrieben. Beispielhaft ist hier Implantat 10 dargestellt. Die Halteeinrichtung weist in dieser Ausführungsform eine Hülse 114 auf, in die das Implantat 10 über eine Öffnung 115 der Hülse (Hülsenöffnung) aufnehmbar ist. Die Öffnung ist derart angeordnet und ausgebildet, dass sie dem Implantat zuwendbar ist, insbesondere auch dann, wenn das Implantat bereits im Kieferknochen verankert ist.

Die Hülse 114 ist z.B. über eine mechanische Verbindung fest mit dem ersten Schenkel 110 verbunden. Der Aufbaubereich 20 des Implantats 10 ist biegemomentenstabil in die Halteeinrichtung 113, d.h. in die Hülse 114, aufgenommen. Durch die Aufnahme in die Hülse 114 wird das Implantat 10 in der Vorrichtung positioniert. Für unterschiedliche Abutmentgeometrien, also Geometrien des Aufbaubereichs, ist die Halteeinrichtung 113 oder zumindest der hülsenförmige Teil auswechselbar.

An einem distalen Ende 121 des zweiten Schenkels 120 ist eine Stützeinrichtung 123 vorgesehen, die über Plattenelemente 124 und 125 (siehe Fig. 6A) gehalten ist. In Fig. 5A ist nur Plattenelement 124 sichtbar. Fig. 6A zeigt das erste Plattenelement 124 und das zweite Plattenelement 125, die einander beabstandet gegenüberliegen und einen Hohlraum 126 dazwischen ausbilden. In diesen Hohlraum erstreckt sich die Halteeinrichtung 113 an dem distalen Ende 111 des ersten Schenkels 110. Die Stützeinrichtung 123 ist in dieser Ausführungsform als ein die Plattenelemente verbindendes hakenförmiges Element ausgebildet.

Die Plattenelemente 124, 125 sind Teil einer Führungseinrichtung 130, die die Schenkel 110, 120 gelenkig miteinander verbindet, so dass die Schenkel und damit die Halteeinrichtung und die Stützeinrichtung auf einer definierten Bahn, vorzugsweise bogenförmig, relativ zueinander bewegbar sind. Die Führungseinrichtung 130 ist also derart ausgebildet, dass die Schenkel und damit die Halteeinrichtung und die Stützeinrichtung definiert zueinander bewegbar sind.

Sowohl das erste Plattenelement 124, als auch das zweite Plattenelement 125 weisen jeweils eine Führungsbahn 131, 132 auf (erste Führungsbahn 131, zweite Führungsbahn 132). In diese sind Zapfenelemente als Führungselemente 133, 134 der Führungseinrichtung 130 eingeführt (eine geführte Verbindung lässt sich auch über andere Elemente realisieren). Die Zapfenelemente 133, 134 sind in dieser Ausführungsform an dem distalen Ende 111 des ersten Schenkels 110 angeordnet bzw. befestigt und stellen durch das Eingreifen in die Führungsbahnen eine Verbindung zwischen den Schenkeln 110 und 120 her. Die Führungseinrichtung ist hier als eine Kulissenführung ausgebildet und ermöglicht das Verschwenken der Schenkel, d.h. die Relativbewegung der Branchen oder Schenkel gegeneinander.

Die Führungsbahnen sind hier als Schlitze und damit als Öffnungen ausgebildet. Auch könnten die Führungsbahnen als Nuten ausgebildet sein.

Wie den Figuren zu entnehmen ist, sind die zwei Zapfenelemente 133, 134 (Führungselemente) derart an dem distalen Ende 111 des ersten Schenkels 110 angeordnet, dass die Halteeinrichtung zwischen den Zapfenelementen angeordnet ist. Jeder der Zapfen greift mit einem Ende in den ersten Führungsschlitz 131 an dem ersten Plattenelement 124 und mit dem anderen Ende in den zweiten Führungsschlitz 132 an dem zweiten Plattenelement 125 ein.

Aufgrund der Kulissenführung ist die Bewegungsmöglichkeit vorgegeben, d.h., nur eine definierte Bewegung der Schenkel ist möglich. Die Kulissenführung ist also so ausgebildet, dass die Relativbewegung der beiden Zangenschenkel und damit der Halteeinrichtung und der Stützeinrichtung auf einer definierten Bahn erfolgt. Das heißt, es ist ein Bezug zur Biegelinie des Biegebereichs hergestellt, die Bewegung folgt oder folgt im Wesentlichen der Biegelinie des Biegebereichs oder definiert die Biegelinie des Biegebereichs. Damit ist auch ein Biegewinkel vorgegeben, das heißt der maximale Winkel, der zwischen dem Aufbaubereich und dem Verankerungsbereich des Implantats mittels der Vorrichtung 100 erzielbar ist.

Der erste Zangenschenkel 110 wird also gegenüber dem zweiten Zangenschenkel 120 in der Kulissenführung geführt. Gemäss den mechanischen Einspannungsbedingungen liegt der Mittelpunkt 135 der hier kreisförmig ausgebildeten Kulissenführung nahe oder in der Ebene der festen Einspannung, also in der Grenzebene zwischen Aufbaubereich (Abutmentkonus) und Biegebereich (Biegezone). Alternativ zu kreisförmigen Kulissenführungen können je nach Anforderungen an die Biegelinie andere Geometrien / Kurvenformen, z.B. Ellipsen, vorgesehen sein.

Die Relativbewegung der Schenkel zueinander und damit eine Schließbewegung der Schenkel ermöglicht die Biegung des Implantats, so dass ein definierter Biegewinkel zwischen Aufbaubereich und Verankerungsbereich des Implantats erzeugbar ist.

Die Führungsbahnen 131, 132 weisen jeweils Begrenzungen 136 auf, welche den maximal einstellbaren Biegewinkel begrenzen. Dieser maximale Biegewinkel ist so dimensioniert, dass bei Biegung des Zahnimplantats keine Schädigung des Werkstoffgefüges und damit keine Reduktion der mechanischen Eigenschaften des Implantats auftreten können.

Die Führungseinrichtung 130 ist derart ausgebildet, dass die Führungselemente 133, 134 spielfrei führbar sind.

Damit für den intraoralen Biegevorgang das bereits im Kieferknochen implantierte Implantat einfach in der Hülse 114 der Biegevorrichtung 100 positioniert werden kann, weisen die Führungsbahnen 131, 132 jeweils einen Erweiterungsbereich 137 auf. In diesen Erweiterungsbereich kann das Führungselement, das dem Erweiterungsbereich zugewandt ist, bei maximaler Öffnung der Zangenschenkel in der Endposition hineingleiten, so dass sich die Zangenschenkel noch weiter öffnen lassen. Dies erlaubt eine einfachere Positionierung der Vorrichtung auf dem aus dem Kieferknochen ragenden Aufbaubereich, hier Aufbaukonus 20, des Implantats. Durch die Schließbewegung gleitet das Führungselement wieder in die eigentlichen Führungsbahnen zurück.

Die Halteeinrichtung 113 weist eine weitere Öffnung auf, die der Öffnung 115 gegenüberliegt. In dieser Öffnung ist eine Zeigereinrichtung 142 angeordnet, die die Kontrolle des Biegevorgangs erlaubt. Über die Zeigereinrichtung 142 ist die Orientierung des gebogenen Implantats, d.h. des Aufbaubereichs, in Bezug auf die Zahnreihe eines Patienten anzeigbar (relativ zu benachbarten Implantaten oder zur natürlichen Bezahnung). Das heißt, der aktuelle Biegewinkel kann mittels der Zeigereinrichtung 142, die die aktuelle Ausrichtung des Aufbaubereichs 20 angibt, beurteilt werden.

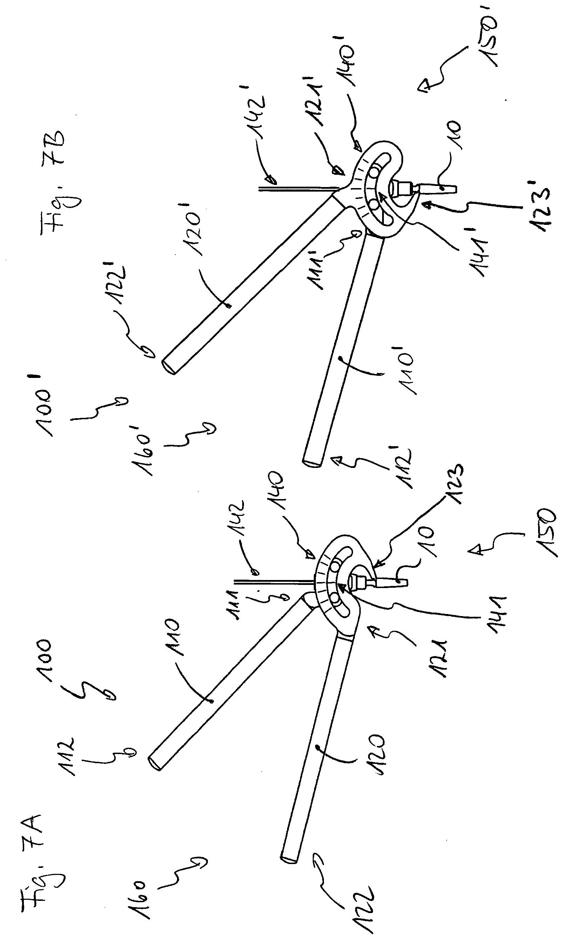

An einer Skala 140 (siehe Fig. 7A) können die relative Position der Branchen bzw. Zangenschenkel 110, 120 und damit der aktuelle Biegewinkel abgelesen werden. Hierzu ist eine entsprechende Markierung 141 an dem distalen Ende 111 bzw. an der Halteeinrichtung 113 vorgesehen. Mittels der Skala kann auch der zur bleibenden Deformation notwendige Überbiegewinkel abgelesen werden.

Die Fig. 5B und 6B zeigen, wie bereits oben angemerkt, eine weitere Ausführungsform einer erfindungsgemäßen Vorrichtung 100' zum Biegen eines Implantats. Im Prinzip weist diese Ausführungsform die gleichen Elemente auf, wie bereits mit der Ausführungsform gemäß der Fig. 5A und 6A beschrieben, nur ist die Vorrichtung derart ausgebildet, dass das Implantat 10, insbesondere der Aufbaubereich, in Richtung Mundhöhle (im Gegensatz zu Richtung Mundöffnung) biegbar ist. Durch eine Schließbewegung der Zangenschenkel wird der kontrollierte Biegevorgang also entweder in Richtung Mundöffnung (Ausführung der Vorrichtung gemäss Fig. 5A, 6A, 7A), oder in Richtung Mundhöhle (Ausführung der Biegezange gemäss Fig. 5B, 6B, 7B) durchgeführt, da es für die Anwendung der Biegevorrichtung am Patienten notwendig ist, dass Implantate sowohl in Richtung Mundöffnung, als auch in Gegenrichtung, d.h. in Richtung Mundhöhle, gebogen werden können.

In der Ausführungsform gemäß der Fig. 5B, 6B (siehe auch Fig. 7B) ist die Stützeinrichtung 123' also derart angeordnet, dass sie in Richtung distales Ende 150' der Vorrichtung 100' weist, in der Ausführungsform gemäß der Fig. 5A, 6A (siehe auch Fig. 7A) ist Stützeinrichtung 123 derart angeordnet, dass sie in Richtung proximales Ende 160 der Vorrichtung 100 weist. Die Ausführungsform, bei welcher die Stützeinrichtung 123' in Richtung distales Ende 150' der Vorrichtung weist, ermöglicht eine Biegung des Implantats in Richtung Mundhöhle, während die Ausführungsform, bei welcher die Stützeinrichtung 123 in Richtung proximales Ende 160 der Vorrichtung weist, eine Biegung des Implantats in Richtung Mundöffnung ermöglicht. Durch eine Schließbewegung der Zangenschenkel wird der kontrollierte Biegevorgang also entweder in Richtung Mundöffnung oder in Richtung Mundhöhle durchgeführt. Die Stützeinrichtung ist jedoch immer am distalen Ende des zweiten Schenkels angeordnet.

Die Stützeinrichtung ist insbesondere derart ausgebildet und/oder angeordnet, dass sie an den Auflagerbereich des Implantats bei einer Schließbewegung der Schenkel ansetzbar ist und/oder dass die Kraft in den Auflagerbereich des Implantats bei einer Schließbewegung der Schenkel einleitbar ist.

Alternativ zur Verwendung von zwei Vorrichtungen zum Biegen eines Implantats für beide Biegerichtungen kann auch eine Zange mit zwei Stützeinrichtungen vorgesehen werden, wobei diese Stützeinrichtungen dann zustellbar, bzw. justierbar sein müssen. Die Stützeinrichtungen sollten dann z.B. auswechselbar oder getrennt positionierbar sein.

Dabei ist zu beachten, dass die nicht in Aktion befindliche Stützeinrichtung (also die nicht benötigte Stützeinrichtung) derart an der Vorrichtung platzierbar ist, dass sie während der Behandlung im Kieferbereich eines Patienten nicht stört. Wie bereits oben ausgeführt, ist die Stützeinrichtung derart ausgebildet, dass nur ein kleiner Bereich des Zahnfleisches und des Knochengewebes in der Umgebung des Implantatlagers zur Durchführung des Biegevorgangs am Kieferkamm chirurgisch freizulegen ist. Eine mögliche zweite Einrichtung muss daher so an der Vorrichtung angebracht sein, dass sie den Arbeitsbereich nicht beeinträchtigt und vor allem die Implantationsregion, d.h., das Gewebe, nicht schädigt.

Die Fig. 7A und 7B zeigen die Ausführungsformen gemäß der Fig. 5A und 5B in einer Seitenansicht. Dabei sind die Biegevorrichtungen 100, 100' jeweils vollständig dargestellt. Sichtbar sind nun die proximalen Enden der Schenkel, das proximale Ende 112, 112' des ersten Schenkels 110, 110' und das proximale Ende 122, 122' des zweiten Schenkels 120, 120'. Auch ist an jeder der Biegevorrichtungen 100, 100' die Zeigereinrichtung 142, 142' angeordnet. Die Skala 140, 140' ist jeweils an einem der Plattenelemente vorgesehen, kann aber auch an jedem der Plattenelement angeordnet sein. Die Markierung 141, 141' ist z.B. zwischen den jeweiligen Zapfenelementen aufgebracht bzw. angeordnet.

Auch das distale Ende 150 und das proximale Ende 160 der Vorrichtung 100 sowie das distale Ende 150' und das proximale Ende 160' der Vorrichtung 100' sind gezeigt.

Im Übrigen zeigen die Fig. 5B, 6B, 7B ebenfalls die distalen Enden 111', 121' des ersten Schenkels 110' bzw. des zweiten Schenkels 120', die Halteeinrichtung 113', die Stützeinrichtung 123', die Führungseinrichtung 130' mit dem ersten Plattenelement 124', dem zweiten Plattenelement 125' sowie den zwischen den Plattenelementen vorgesehenen Hohlraum 126'. Die Plattenelemente weisen die Führungsbahnen 131' und 132' auf. In Figur 5B ist der Mittelpunkt 135' der hier kreisförmig ausgebildeten Kulissenführung angegeben, sowie die Begrenzung 136' und die Erweiterung 137' der sichtbaren Führungsbahn. Hülse, Öffnung und Zapfenelemente sind nicht explizit bezeichnet, entsprechen aber jenen aus den Fig. 5A, 6A und 7A.

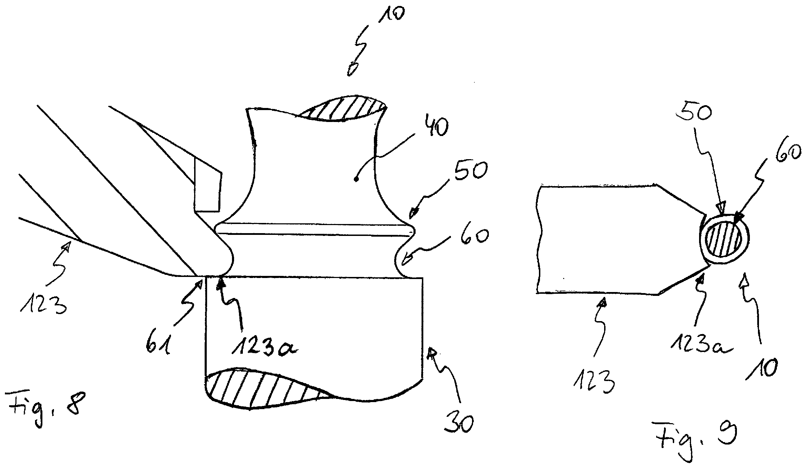

Fig. 8 zeigt einen Ausschnitt aus dem Implantat 10 (aus Fig. 1) mit Biegebereich 40, kragenförmigem Element 50, Auflagerbereich 60 sowie teilweise Verankerungsbereich 30. Die Stützeinrichtung 123 (oder 123') greift formschlüssig in den Auflagerbereich 60 des Implantats ein oder an diesem an und dient als Widerlager (Auflager) während des Biegevorgangs.

Fig. 9 zeigt die Stützeinrichtung 123 von unten, wie sie in den rillenförmigen Auflagerbereich 60 des Implantats 10 eingreift bzw. sich diesem nähert. Die Stützeinrichtung ist in dieser Ausführungsform an einem Ende, dem Angriffsende 123a, das zum Angreifen an den Auflagerbereich vorgesehen ist, bogenförmig ausgebildet und kann sich so an den Auflagerbereich anschmiegen. Die Wölbung des Endes erstreckt sich in Richtung Stützeinrichtung. Das Implantat 10 ist hier im Schnitt dargestellt, wobei der Schnitt quer zur Erstreckungsrichtung 70 des Implantats, in dem Auflagerbereich 60 vorgesehen ist.

Sollen mit der Biegevorrichtung Implantate gebogen werden, wie sie z.B. in den Fig. 3 und 4 gezeigt sind, so würde ein Biegen ebenfalls mit der Stützeinrichtung 123 bzw. 123' ausführbar sein. In beiden Fällen ist ebenfalls ein Anschmiegen der Stützeinrichtung 123 über das Angriffsende 123a an den Auflagerbereich 60' bzw. 60" möglich.

Bei beispielsweise kantigem oder quadratischem Auflagerbereich (abgeflachte Seiten) könnten seitlichen Spitzen des Angriffsendes an dem Auflagerbereich zum Liegen kommen, d.h., an diesem angreifen. Auch könnte das Angriffsende 123a eine andere Formgebung aufweisen.

Die Vorrichtung 100, 100' zum Biegen des Implantats, d.h. die Biegevorrichtung, ist wie folgt betätigbar und nutzbar:
Der Aufbaubereich 20 des Zahnimplantats 10 wird in die Halteeinrichtung 113, 113', d.h. hier in die Hülse 114, eingeführt und so formschlüssig in der Halteeinrichtung 113, 113' gehalten. Wegen des Formschlusses von Hülse und Aufbaubereich des Implantates zentriert sich dadurch die Vorrichtung von selbst auf dem Implantat. Der Formschluss schließt nicht aus, dass ein Ringspalt zwischen eingespanntem Implantat 10 und Hülse 114 vorgesehen ist, um eine Verklemmung des Aufbaubereichs 20 in der Halteeinrichtung 113, 113' zu vermeiden. Die Halterung in der Halteeinrichtung ist kombinierbar mit der Lagerung des Implantats über die nur lokal berührende Stützeinrichtung, die am Auflagerbereich 60, genauer an einem Abschnitt 61 des Auflagerbereichs 60 des Implantats 10 (oder auch eines sonstigen Gegenstandes) klemmungsfrei ansetzt oder positionierbar ist. Somit ist das Implantat 10 in der Biegevorrichtung 100, 100' positionierbar und damit für den anschließenden Biegevorgang vorbereitet. Alternativ zu dem hier gezeigten Auflagerbereich 60, des nutförmigen Bereichs, können am Implantat andere Orte zur Krafteinleitung verwendet werden.

Die Schenkel 110, 110' und 120, 120' können entsprechend einem Zangen- Scheren- oder Klemmwerkzeug betätigt werden, wobei die Führungselemente, hier die Zapfenelemente 133, 134 in den Führungsschlitzen 131, 131', 132, 132' spielfrei führbar sind. Der Biegewinkel ist durch die Ausgestaltung der Führungsschlitze 131, 131', 132, 132' vorgegeben. Eine Handhabung der Schenkel ist über deren proximale Enden 112, 112' bzw. 122, 122' möglich. Diese Enden sind für den Bediener greifbar und können entsprechende Griffelemente aufweisen.

In die Geometrie des Auflagerbereichs 60, insbesondere in einen Abschnitt 61 des Auflagerbereichs 60, wird mittels der Stützeinrichtung 123, 123' (die entsprechend angeordnet ist) eine Biegekraft F (siehe z.B. Fig. 2A) durch das Schließen der Schenkel eingeleitet. Zwischen dem Auflagerbereich 60 und der formschlüssigen oder biegemomentenstabilen Halterung des Aufbaubereichs 20 ist die Geometrie des Biegebereichs so ausgebildet, dass bei Biegebeanspruchung eine kontrollierte Deformation im Werkstoffvolumen des Biegebereichs 40 stattfindet.

Wie dem Diagramm in Fig. 2B zu entnehmen ist, wird, ausgehend vom Angriffsort der Stützeinrichtung in dem Auflagerbereich des Implantats (Kraft F), hin zur Einspannung am Aufbaubereich, ein ansteigendes Biegemoment M_{b} erzeugt (ansteigendend über die Länge 1 des Biegebereichs). Da die Vorrichtung zum Biegen (Biegeinstrument) die Kräfte und Momente zwischen Auflagerbereich und Aufbaubereich neutralisiert, erfahren der enossale Bereich und damit der den Verankerungsbereich umgebende Knochen weder Kräfte noch Momente aus dem Biegeprozess.

Die Implantation erfolgt so, dass das dem Aufbaubereich 20 zugewandte Ende des ersten Gewindeabschnitts 33 auf oder leicht unter dem Knochenniveau 80 liegt. Auf Grund der anatomischen Gegebenheiten, d.h. der Krümmung des Kieferkamms, liegt dann der Auflagerbereich 60 entweder über dem Knochenniveau oder teilweise auch auf oder leicht unter dem Knochenniveau.

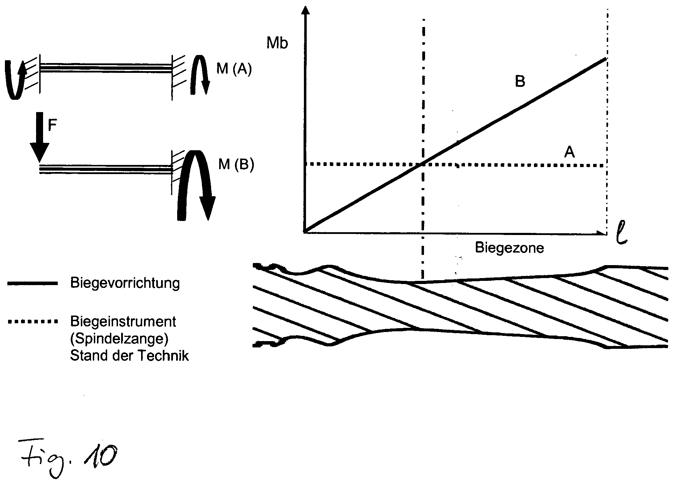

Fig. 10 zeigt einen Vergleich in der Anwendung einer Biegevorrichtung aus dem Stand der Technik (EP 2 438 885 A1, Spindelzange, siehe unter A) und der Anwendung der erfindungsgemäßen Biegevorrichtung, siehe unter B). Die bekannte Vorrichtung erfordert eine feste Einspannung auf beiden Seiten des Biegebereichs des Implantats, einmal formschlüssig am Biegekragen (kragenförmiger Bereich) und einmal formschlüssig am Aufbaukonus, so dass auf beiden Seiten ein Biegemoment eingeleitet wird. Durch diese Einspannung und Lasteinleitung wird im Biegebereich eine Beanspruchung in Form eines konstanten Biegemomentes M_{b} über die Länge 1 des Biegebereichs erzeugt. Gegenüber der beidseitigen momentenstabilen Einspannung erzeugt das erfindungsgemäße Biegeverfahren mit einseitiger Einspannung, ausgehend vom Angriffsort der Stützeinrichtung in dem Auflagerbereich des Implantats, hin zur Einspannung am Aufbaubereich, ein ansteigendes Biegemoment M_{b} (siehe auch Fig. 2B).

Grundsätzlich lässt sich mit der Vorrichtung zum Biegen auch jeder andere Gegenstand biegen, der in der Vorrichtung positionierbar ist. Dabei ist eine Biegung auch im verankerungsfreien Zustand möglich. Ziel ist es aber insbesondere, ein bereits implantiertes, also verankertes Zahnimplantat so zu verformen, dass eine Schädigung des Knochenlagers vermieden wird, wobei die Region am Kieferkamm möglichst schonend behandelt werden soll.

### Untersuchungen zum erfindungsgemäßen Biegebereich des Implantats

Das erfindungsgemäße Implantat weist die spezielle Ausgestaltung des Biegebereichs auf. Würde bei der einseitigen Einspannung ein Biegebereich mit konstantem Querschnitt oder ein von apikal nach zervikal sich verjüngender Querschnitt verwendet werden, so würde dieser knickförmig nahe der Einspannung am Aufbaubereich biegen. Diese Anordnung würde schon bei kleinen Biegewinkeln, wegen der Spannungskonzentration nahe der Einspannung am Aufbaubereich zur Schädigung des Gefüges führen. Das heißt, es könnten so keine größeren Biegewinkel ohne Gefügeschädigung erzeugt werden.

Ein Verfahren zur Beurteilung der Umformbarkeit eines Werkstoffes, im hier vorliegenden Falle der mehrmaligen Biegung, ist die numerische Analyse mit der Methode der Finiten Elemente. Neben der Berücksichtigung des elastoplastischen Verhaltens werden für diese Simulationen experimentell ermittelte Bruchgrenzkurven (erreichbare plastische Dehnung als Funktion des Spannungszustandes) vorgegeben. Ein Versagen kann dabei durch duktilen Trennbruch (Ductile normal fracture DNF) oder durch duktilen Scherbruch (ductile shear fracture DSF) erfolgen. Das Auftreten von Bruch wird mit den entsprechenden Bruchrisiken bewertet (Bruchrisiko > 1,0 bedeutet Versagen). Die Differenz des ermittelten Wertes DNF bzw. DSF zu 1,0 ist ein Mass für die Sicherheit oder die Reserve bis zum Eintreten eines Bruches im Material.

Wird eine Geometrie, wie sie bei einem Biegebereich nach den Fig. 2A, 3 oder 4 vorgesehen ist, bzgl. der potentiellen Schädigung des Werkstoffes bei einer maximalen praxisrelevanten Biegung (Worst Case Beanspruchung) des Implantats von 20°, gefolgt von einer Rückbiegung von 10°, gefolgt von einer weiteren Biegung von 5° untersucht, so hat sich herausgestellt, dass sich für einen geeigneten (s.o.), hier zu verwendenden Werkstoff (die vorgeschlagene Werkstoffgruppe) für die schädigungsbeschreibenden Werte DNF = 0,42 und DSF = 0,29 ergeben. Damit ist in jedem Fall ein Sicherheitsfaktor 2 gegen Bruch bei der Worst Case Beanspruchung gegeben.

### Bezugszeichenliste

- 10, 10', 10": Implantat
- 20, 20', 20": Aufbaubereich
- 21: dem Verankerungsbereich zugewandtes Ende
- 22: freies Ende, koronales Ende
- 30, 30', 30": Verankerungsbereich
- 31: dem Aufbaubereich zugewandtes Ende
- 32: freies Ende, enossales Ende
- 33, 33': erster Gewindeabschnitt
- 34: Schneidkante erster Gewindeabschnitt
- 35: zweiter Gewindeabschnitt
- 36: Schneidkante zweiter Gewindeabschnitt
- 40, 40', 40": Biegebereich
- 41: dem Aufbaubereich zugewandtes Ende
- 42: dem Verankerungsbereich zugewandtes Ende
- 43: kleinster Querschnitt
- 44: Querschnitt an dem dem Aufbaubereich zugewandten Ende, zervikaler Querschnitt
- 45: Querschnitt an dem dem Verankerungsbereich zugewandten Ende, apikaler Querschnitt
- 46: erste radiusförmige Geometrie
- 47: zweite radiusförmige Geometrie
- 50: kragenförmiges Element
- 60, 60', 60": Auflagerbereich
- 61: Abschnitt Auflagerbereich
- 70, 70', 70": Erstreckungsrichtung, Längsrichtung Implantat

- 80: Knochenniveau

- 100, 100': Vorrichtung zum Biegen (Instrument)
- 110, 110': erster Schenkel, erste Branche
- 111, 111': distales Ende erster Schenkel
- 112, 112': proximales Ende erster Schenkel
- 113, 113': Halteeinrichtung
- 114: Hülse
- 115: Öffnung
- 120, 120': zweiter Schenkel, zweite Branche
- 121, 121': distales Ende zweiter Schenkel
- 122, 122': proximales Ende zweiter Schenkel
- 123, 123': Stützeinrichtung
- 123a: Angriffsende
- 124, 124': erstes Plattenelement
- 125, 125': zweites Plattenelement
- 126, 126': Hohlraum
- 130, 130': Führungseinrichtung
- 131, 131': erste Führungsbahn
- 132, 132': zweite Führungsbahn
- 133: Führungselement, Zapfenelement
- 134: Führungselement, Zapfenelement
- 135, 135': Mittelpunkt
- 136, 136': Begrenzung
- 137, 137': Erweiterungsbereich
- 140, 140': Skala
- 141, 141': Markierung
- 142, 142': Zeigereinrichtung
- 150, 150': distales Ende Vorrichtung
- 160, 160': proximales Ende Vorrichtung

- Mb: Biegemoment
- F: Kraft
- 1: Länge Biegebereich

## Patentansprüche

1. Einteiliges Zahnimplantat (10, 10', 10"), umfassend:
- einen Verankerungsbereich (30, 30', 30"), und
- einen Aufbaubereich (20, 20', 20"),
wobei das einteilige Zahnimplantat ferner umfasst:
- einen Biegebereich (40, 40', 40"), der an einem dem Verankerungsbereich zugewandten Ende (21) des Aufbaubereichs (20, 20', 20"), zwischen dem Aufbaubereich (20, 20', 20") und dem Verankerungsbereich (30, 30', 30"), angeordnet ist,
- einen Auflagerbereich (60, 60', 60"), der an einem dem Aufbaubereich zugewandten Ende (31) des Verankerungsbereichs (30, 30', 30"), zwischen dem Biegebereich (40, 40', 40") und dem Verankerungsbereich (30, 30', 30") angeordnet ist,
wobei der Biegebereich (40, 40', 40") einen kleinsten Querschnitt (43) aufweist, der in einer dem Verankerungsbereich zugewandten Hälfte des Biegebereichs (40, 40', 40") angeordnet ist, **dadurch gekennzeichnet, dass** sich der Querschnitt des Biegebereichs (40, 40', 40") ausgehend von dem kleinsten Querschnitt (43) hin zu einem dem Aufbaubereich zugewandten Ende (41) des Biegebereichs (40, 40', 40") kontinuierlich vergrößert, so dass sich bei Biegebeanspruchung, unter Einwirkung des hin zum Aufbaubereich linear zunehmenden Biegemomentes, nach Überschreitung der Fließspannung, die Fließvorgänge in dem Werkstoffvolumen des Biegebereichs homogen verteilen und so keine lokale Schädigung des Werkstoffgefüges entsteht.

2. Implantat nach Anspruch 1, **dadurch gekennzeichnet, dass** der kleinste Querschnitt (43) an einem dem Verankerungsbereich zugewandten Ende (42) des Biegebereichs (40, 40', 40") angeordnet ist.

3. Implantat nach Anspruch 1 oder 2, **dadurch gekennzeichnet, dass**
dieses zur Verankerung im menschlichen Ober- oder Unterkiefer ausgebildet ist,
der Verankerungsbereich (30, 30', 30") zum Einbringen in den Ober- oder Unterkiefer ausgebildet ist,
der Aufbaubereich (20, 20', 20") zur Aufnahme einer zahnprothetischen Konstruktion ausgebildet ist, und
der Auflagerbereich (60, 60', 60") zum Ansetzen einer Vorrichtung zum Biegen des Implantats ausgebildet ist.

4. Implantat nach einem der Ansprüche 1 bis 3, **dadurch gekennzeichnet, dass** der Biegebereich (40, 40', 40")
(i) an dem dem Aufbaubereich zugewandten Ende (41) eine erste radiusförmige Geometrie (46) aufweist;
und/oder
(ii) an einem oder dem dem Verankerungsbereich zugewandten Ende (42) eine zweite radiusförmige Geometrie (47) aufweist, die derart ausgebildet ist, dass sich der Querschnitt des Biegebereichs ausgehend von dem kleinsten Querschnitt (43) hin zu dem dem Verankerungsbereich zugewandten Ende (42) des Biegebereichs (40, 40', 40") kontinuierlich vergrößert.

5. Implantat nach einem der Ansprüche 1 bis 4, **dadurch gekennzeichnet, dass**
(i) der Auflagerbereich (60) als ein nutförmiger Bereich ausgebildet ist;
und/oder
(ii) der Auflagerbereich (60) als ein in einer Umfangsrichtung des Implantats nutförmig verlaufender Bereich ausgebildet ist.

6. Implantat nach einem der Ansprüche 1 bis 5, **dadurch gekennzeichnet, dass**
(i) der Auflagerbereich (60) einen sich in einer Erstreckungsrichtung (70) des Implantats erstreckenden Kantenbereich aufweist, der sich nach innen wölbend ausgebildet ist;
oder
(ii) der Auflagerbereich (60') einen sich in einer Erstreckungsrichtung (70') des Implantats erstreckenden Kantenbereich aufweist, der geradlinig ausgebildet ist;
oder
(iii) der Auflagerbereich (60") einen sich in einer Erstreckungsrichtung (70") des Implantats erstreckenden Kantenbereich aufweist, der sich nach außen wölbend ausgebildet ist.

7. Implantat nach einem der Ansprüche 1 bis 6, **dadurch gekennzeichnet, dass** das Implantat ein kragenförmiges Element (50) aufweist, das zwischen dem Biegebereich (40, 40', 40") und dem Auflagerbereich (60, 60', 60") angeordnet ist.

8. Implantat nach einem der Ansprüche 1 bis 7, **dadurch gekennzeichnet, dass** das Implantat aus einem plastisch deformierbaren Titan-Werkstoff ausgebildet ist.

9. Implantat nach einem der Ansprüche 1 bis 8, **dadurch gekennzeichnet, dass**
(i) der Aufbaubereich (20, 20', 20"), der Verankerungsbereich (30, 30', 30"), der Biegebereich (40, 40', 40"), der Auflagerbereich (60, 60', 60") und/oder das kragenförmige Element (50) als rotationssymmetrische Bereiche ausgebildet sind;
und/oder
(ii) der Aufbaubereich (20, 20', 20") als ein Aufbaukonus ausgebildet ist, der sich hin zu einem freien Ende (22) des Aufbaubereichs (20, 20', 20") verjüngt.

10. System, umfassend
ein Implantat nach einem der Ansprüche 1 bis 9; und
eine Biegevorrichtung (100, 100'), wobei die Biegevorrichtung umfasst:
- einen ersten Schenkel (110, 110') und einen zweiten Schenkel (120, 120'), die gelenkig miteinander verbunden und entsprechend einem Scheren- oder Zangenwerkzeug betätigbar sind,
- eine Halteeinrichtung (113, 113'), wobei die Halteeinrichtung (113, 113') an einem distalen Ende (111, 111') des ersten Schenkels (110, 110') angeordnet ist,
- eine Stützeinrichtung (123, 123'), wobei die Stützeinrichtung (123, 123') an einem distalen Ende (121, 121') des zweiten Schenkels (120, 120') angeordnet ist,
wobei die Halteeinrichtung (113, 113') und die Stützeinrichtung (123, 123') mittels des ersten Schenkels (110, 110') und des zweiten Schenkels (120, 120') relativ zueinander bewegbar sind.

11. System, nach Anspruch 10,
wobei die Biegevorrichtung (100, 100') zum Biegen des Implantats ausgebildet ist, wobei die Halteeinrichtung (113, 113') zum Fixieren, insbesondere zum biegemomentenstabilen Fixieren, des Aufbaubereichs des Implantats (10, 10', 10") oder von mindestens einem Teil des Aufbaubereichs des Implantats ausgebildet ist,
wobei die Stützeinrichtung (123, 123') zum Ansetzen an den Auflagerbereich des Implantats (10, 10', 10") und/oder zum Einleiten einer Kraft (F) in den Auflagerbereich des Implantats (10, 10', 10") ausgebildet ist,
wobei die Halteeinrichtung (113, 113') und die Stützeinrichtung (123, 123') mittels des ersten Schenkels (110, 110') und des zweiten Schenkels (120, 120') insbesondere bogenförmig relativ zueinander bewegbar sind.

## Claims

1. A one-part tooth implant (10, 10', 10"), comprising:
- an anchoring region (30, 30', 30"), and
- an abutment region (20, 20', 20"),
wherein the one-part tooth implant further comprises:
- a bending region (40, 40', 40"), which is arranged on an end (21) of the abutment region (20, 20', 20") facing toward the anchoring region, between the abutment region (20, 20', 20") and the anchoring region (30, 30', 30"),
- a bearing region (60, 60', 60"), which is arranged on an end (31) of the anchoring region (30, 30', 30") facing toward the abutment region, between the bending region (40, 40', 40") and the anchoring region (30, 30', 30"),
wherein the bending region (40, 40', 40") has a smallest cross section (43), which is arranged in a half of the bending region (40, 40', 40") facing toward the anchoring region,
**characterized in that**
the cross section of the bending region (40, 40', 40") continuously enlarges, originating from the smallest cross section (43) toward an end (41) of the bending region (40, 40', 40") facing toward the abutment region, so that, in the event of bending stress, under the effect of the bending torque, which increases linearly toward the abutment region, after exceeding the yield stress, the flowing procedures are homogeneously distributed in the material volume of the bending region and no local damage of the material microstructure thus results.

2. The implant of claim 1, **characterized in that** the smallest cross section (43) is arranged on an end (42) of the bending region (40, 40', 40") facing toward the anchoring region.

3. The implant of claim 1 or 2, **characterized in that**
it is designed for anchoring in the human maxilla or mandible,
the anchoring region (30, 30', 30") is designed for introducing into the maxilla or mandible,
the abutment region (20, 20', 20") is designed for receiving a dental-prosthesis construction, and
the bearing region (60, 60', 60") is designed for applying a device for bending the implant.

4. The implant of any one of claims 1 to 3, **characterized in that** the bending region (40, 40', 40")
(i) has a first radius-shaped geometry (46) on the end (41) facing toward the abutment region;
and/or
(ii) has a second radius-shaped geometry (47) on a or the end (42) facing toward the anchoring region, which is designed such that the cross section of the bending region continuously enlarges, originating from the smallest cross section (43) toward the end (42) of the bending region (40, 40', 40") facing toward the anchoring region.

5. The implant of any one of claims 1 to 4, **characterized in that**
(i) the bearing region (60) is designed as a groove-shaped region;
and/or
(ii) the bearing region (60) is designed as a groove-shaped region extending in a circumferential direction of the implant.

6. The implant of any one of claims 1 to 5, **characterized in that**
(i) the bearing region (60) has an edge region extending in an extension direction (70) of the implant, which is designed as curving inward;
or
(ii) the bearing region (60') has an edge region extending in an extension direction (70') of the implant, which is designed as being linear;
or
(iii) the bearing region (60") has an edge region extending in an extension direction (70") of the implant, which is designed as curving outward.

7. The implant of any one of claims 1 to 6, **characterized in that** the implant has a collar-shaped element (50), which is arranged between the bending region (40, 40', 40") and the bearing region (60, 60', 60").

8. The implant of any one of claims 1 to 7, **characterized in that** the implant is formed from a plastically deformable titanium material.

9. The implant of any one of claims 1 to 8, **characterized in that**
(i) the abutment region (20, 20', 20"), the anchoring region (30, 30', 30"), the bending region (40, 40', 40"), the bearing region (60, 60', 60"), and/or the collar-shaped element (50) are designed as rotationally symmetrical regions;
and/or
(ii) the abutment region (20, 20', 20") is designed as an abutment cone, which tapers toward a free end (22) of the abutment region (20, 20', 20").

10. A system, comprising
an implant of any one of claims 1 to 9; and
a bending device (100, 100'), the bending device comprising:
- a first leg (110, 110') and a second leg (120, 120'), which are articulately jointed with one another and are actuatable corresponding to a scissors or pliers tool,
- a holding unit (113, 113'), wherein the holding unit (113, 113') is arranged on a distal end (111, 111') of the first leg (110, 110'),
- a support unit (123, 123'), wherein the support unit (123, 123') is arranged on a distal end (121, 121') of the second leg (120, 120'),
wherein the holding unit (113, 113') and the support unit (123, 123') are movable in relation to one another by means of the first leg (110, 110') and the second leg (120, 120').

11. The system of claim 10,
wherein the bending device (100, 100') is designed for bending an implant,
wherein the holding unit (113, 113') is designed for fixing, in particular for bending-torque-stable fixing, of the abutment region of the implant (10, 10', 10") or of at least a part of the abutment region of the implant,
wherein the support unit (123, 123') is designed for application to the bearing region of the implant (10, 10', 10") and/or for introducing a force (F) into the bearing region of the implant (10, 10', 10"),
wherein the holding unit (113, 113') and the support unit (123, 123') are movable, in particular in an arc shape, in relation to one another by means of the first leg (110, 110') and the second leg (120, 120').

## Revendications

1. Implant dentaire en une seule pièce (10, 10', 10") comprenant :
- une partie d'ancrage (30, 30', 30") et
- une partie de structure (20, 20', 20"),
l'implant dentaire en une seule pièce comprenant en outre :
- une partie de pliage (40, 40', 40") qui est disposée au niveau d'une extrémité (21), orientée vers la partie d'ancrage, de la partie de structure (20, 20', 20"), entre la partie de structure (20, 20', 20") et la partie d'ancrage (30, 30', 30"),
- une partie d'appui (60, 60', 60") qui est disposée au niveau d'une extrémité (31), orientée vers la partie de structure, de la partie d'ancrage (30, 30', 30"), entre la partie de pliage (40, 40', 40") et la partie d'ancrage (30, 30', 30"),
la partie de pliage (40, 40', 40") présentant la section transversale la plus petite dans une moitié, orientée vers la partie d'ancrage, de la partie de pliage (40, 40', 40"),
**caractérisé en ce que**
la section transversale de la partie de pliage (40, 40', 40") augmente de manière continue à partir de la section transversale la plus petite (43) vers une extrémité (41), orientée vers la partie de structure, de la partie de pliage (40, 40', 40"), de façon à ce que, lors d'une sollicitation en flexion, sous l'effet d'un couple de flexion augmentant linéairement en direction de la partie de structure, après dépassement de la tension de fluage, les processus de fluage dans le volume du matériau de la partie de pliage se répartissent de manière homogène et de façon à ce qu'il n'en résulte aucun endommagement local de la structure du matériau.

2. Implant selon la revendication 1,
**caractérisé en ce que** la section transversale la plus petite (43) est disposée au niveau de l'extrémité (42), orientée vers la partie d'ancrage, de la partie de pliage (40, 40', 40").

3. Implant selon la revendication 1 ou 2, **caractérisé en ce que**
celui-ci est conçu pour être ancré dans une mâchoire supérieure ou inférieure humaine,
la partie d'ancrage (30, 30', 30") est conçue pour être insérée dans la mâchoire supérieure ou inférieure,
la partie de structure (20, 20', 20") est conçue pour le logement d'une construction de prothèse dentaire et
la partie d'appui (60, 60', 60") est conçue pour la pose d'un dispositif pour le pliage de l'implant.

4. Implant selon l'une des revendications 1 à 3, **caractérisé en ce que** la partie de pliage (40, 40', 40")
(i) présente, au niveau de l'extrémité (41) orientée vers la partie de structure, une géométrie en forme de rayon (46) ;
et/ou
(ii) présente, au niveau de l'extrémité (42) orientée vers la partie d'ancrage, une deuxième géométrie en forme de rayon (47), qui est conçue de façon à ce que la section transversale de la partie de pliage augmente de manière continue à partir de la section transversale la plus petite (43) en direction de l'extrémité (42), orientée vers la partie d'ancrage, de la partie de pliage (40, 40', 40").

5. Implant selon l'une des revendications 1 à 4, **caractérisé en ce que**
(i) la partie de structure (60) est conçue comme une partie en forme de rainure ; et/ou
(ii) la partie d'appui (60) est conçue comme une partie d'étendant sous la forme d'une rainure dans la direction de la circonférence de l'implant.

6. Implant selon l'une des revendications 1 à 5, **caractérisé en ce que**
(i) la partie d'appui (60) comprend une partie d'arête, s'étendant dans une direction d'extension (70) de l'implant, qui est conçue de façon à s'incurver vers l'intérieur ;
ou
(ii) la partie d'appui (60') comprend une partie d'arête s'étendant dans une direction d'extension (70') de l'implant, qui est conçue en ligne droite ;
ou
(iii) la partie d'appui (60") comprend une partie d'arête s'étendant dans une direction d'extension (70") de l'implant, qui est conçue de façon à s'incurver vers l'extérieur.

7. Implant selon l'une des revendications 1 à 6, **caractérisé en ce que** l'implant comprend un élément en forme de col (50), qui est disposé entre la partie de pliage (40, 40', 40") et la partie d'appui (60, 60', 60").

8. Implant selon l'une des revendications 1 à 7, **caractérisé en ce que** l'implant est constitué d'un matériau à base de titane plastiquement déformable.

9. Implant selon l'une des revendications 1 à 8, **caractérisé en ce que**
(i) la partie de structure (20, 20', 20"), la partie d'ancrage (30, 30', 30"), la partie de pliage (40, 40', 40"), la partie d'appui (60, 60', 60") et/ou l'élément en forme de col (50) sont conçus comme des parties à symétrie en rotation ;
et/ou
(ii) la partie de structure (20, 20', 20") est conçue comme un cône de structure qui se rétrécit en direction d'une extrémité libre (22) de la partie de structure (20, 20', 20").

10. Système comprenant
un implant selon l'une des revendications 1 à 9 ; et
un dispositif de pliage (100, 100'), ce dispositif de pliage comprenant :
- une première branche (110, 110') et une deuxième branche (120, 120'), qui sont reliées entre elles de manière articulée et qui peuvent être actionnées à la manière d'une paire de ciseaux ou d'une pince ;
- un dispositif de maintien (113, 113'), ce dispositif de maintien (113, 113') étant disposé au niveau d'une extrémité distale (111, 111') de la première branche (110, 110'),
- un dispositif de soutien (123, 123'), le dispositif de soutien (123, 123') étant disposé au niveau d'une extrémité distale (121, 121') de la deuxième branche (120, 120'),
le dispositif de maintien (113, 113') et le dispositif de soutien (123, 123') pouvant être déplacés l'un par rapport à l'autre au moyen de la première branche (110, 110') et de la deuxième branche (120, 120').

11. Système selon la revendication 10,
le dispositif de pliage (100, 100') étant conçu pour le pliage de l'implant,
le dispositif de maintien (113, 113') étant conçu pour la fixation, plus particulièrement pour la fixation résistant au couple de flexion, de la partie de structure de l'implant (10, 10', 10") ou étant constitué par au moins une partie de la partie de structure de l'implant,
le dispositif de soutien (123, 123') étant conçu pour être posé sur la partie d'appui de l'implant (10, 10', 10") et/ou pour l'application d'une force (F) dans la partie d'appui de l'implant (10, 10', 10"),
le dispositif de maintien (113, 113') et le dispositif de soutien (123, 123') pouvant être déplacés l'un par rapport à l'autre au moyen de la première branche (110, 110') et de la deuxième branche (120, 120'), plus particulièrement sous la forme d'un arc de cercle.
